# EUROPÄISCHE PATENTSCHRIFT

(11) **EP 3 841 167 B1**
(45) Veröffentlichungstag und Bekanntmachung des Hinweises auf die Patenterteilung: **22.02.2023**
(21) Anmeldenummer: 19753407.6
(22) Anmeldetag: 20.08.2019
(51) Int. Cl.: C08K 5/549, C08K 5/5419, C08L 83/04

(54) **ZUSAMMENSETZUNG FÜR SILIKONKAUTSCHUKMASSEN**
COMPOSITION FOR SILICONE RUBBER MASSES
COMPOSITIONS POUR MASSES EN CAOUTCHOUC SILICONE

(30) Priorität: 20.08.2018 EP 18189821
(43) Veröffentlichungstag der Anmeldung: 30.06.2021
(73) Patentinhaber: Nitrochemie Aschau GmbH, 84544 Aschau am Inn (DE)
(72) Erfinder: LANGERBEINS, Klaus, 50259 Pulheim (DE); KRUPP, Alexis, 84478 Waldkaiburg (DE); PICHL, Ulrich, 84544 Aschau (DE)
(74) Vertreter: Müller Schupfner & Partner Patent- und Rechtsanwaltspartnerschaft mbB
(86) Internationale Anmeldenummer: PCT/EP2019/072280
(87) Internationale Veröffentlichungsnummer: WO 2020/038950

(56) Entgegenhaltungen:
- EP-A1- 3 269 785
- WO-A1-2018/019632
- US-A- 4 499 234
- US-A- 5 777 144
- US-A1- 2018 066 165

## Beschreibung

Die Erfindung betrifft eine Zusammensetzung enthaltend einen Härter für Silikonkautschukmassen und ein Organosilan, vorzugsweise ein zyklisches Organosilan, Dichtungsmittel, Klebstoffe oder Beschichtungsmittel enthaltend diese Zusammensetzung, die Verwendung dieser Zusammensetzung zur Herstellung einer Silikonkautschukmasse und deren Verwendung als Dichtungsmittel, Klebstoff oder Beschichtungsmittel.

Kalthärtende Silikonkautschukmassen, auch RTV-(Raumtemperaturvernetzende)-Silikonkautschukmassen genannt, sind als maßgeschneiderte Werkstoffe mit elastischen Eigenschaften bekannt. Sie finden breite Anwendung als Dichtstoffe, als Fugenmaterial oder als Klebstoffe für Glas, Porzellan, Keramik, Stein, Kunststoffe, Metalle, Holz etc., vor allem im Sanitärbereich, im Hochbau oder als Beschichtungsmaterialien. Bevorzugt kommen kalthärtende Silikonkautschukmassen als Einkomponenten-RTV-Siliconkautschukmassen (RTV-1) zum Einsatz. Derartige Silikonkautschukmassen sind üblicherweise plastisch verformbare Mischungen aus Polyorganosiloxanen mit funktionellen Gruppen und geeigneten Vernetzungsmitteln, insbesondere geeigneten Härtern, die unter Feuchtigkeitsausschluss aufbewahrt werden. Diese Mischungen vernetzen unter dem Einfluss von Wasser oder Luftfeuchtigkeit bei Raumtemperatur. Dieser Vorgang wird üblicherweise auch als Aushärten bezeichnet. Die dabei eingesetzten Härter werden häufig auch als Vernetzer bezeichnet. Zusätzlich kommen in den Silikonkautschukmassen regelmäßig Haftvermittler zum Einsatz. Sie übernehmen in Silikonkautschukmassen (z.B. Dicht- oder Klebstoffen) die wichtige Eigenschaft eine gute Haftung auf verschiedenen Untergründen zu gewährleisten.

Die Eigenschaften der ausgehärteten Silikonkautschukmassen werden maßgeblich durch die verwendeten Polyorganosiloxane, die verwendeten Härter und Haftvermittler bestimmt. Beispielsweise kann in Abhängigkeit der Verwendung von tri- und/oder tetrafunktionalen Härtern der Vernetzungsgrad der ausgehärteten Silikonkautschukmasse gesteuert werden. Der Vernetzungsgrad hat einen erheblichen Einfluss auf z.B. die Lösemittelresistenz der ausgehärteten Silikonkautschukmasse. Auch die verwendeten Haftvermittler modifizieren die Eigenschaften der resultierenden Dichtstoffe beispielsweise durch Wechselwirkungen mit den übrigen Komponenten der Formulierung. Als Haftvermittler kommen dabei üblicherweise Substanzen zum Einsatz, die sowohl mit der Silikonkautschukmasse als auch mit dem Untergrund in Wechselwirkung treten können. Dies wird bisher üblicherweise über Verbindungen erreicht, die eine Silangruppe und eine weitere, reaktive funktionelle Gruppe tragen. Mitunter werden Organosilane mit reaktiven Amino-, Carboxy-, Epoxy- oder Thiolatogruppen eingesetzt. Dabei tritt die reaktive funktionelle Gruppe mit dem Untergrund in Wechselwirkung. Organosilane mit reaktiven Aminogruppen werden dabei besonders häufig eingesetzt, beispielsweise in Form von Trimethoxy[3-(methylamino)propyl]silan.

Ein Nachteil dieser reaktiven Verbindungen, insbesondere der besonders reaktiven primären und sekundären Aminverbindungen, ist ihre geringe Spezifität gegenüber möglichen Reaktionspartnern. So werden beispielsweise neben den gewünschten Reaktionen von Haftvermittlern mit dem Untergrund auch Nebenreaktionen beobachtet. Häufig finden solche Nebenreaktionen auch bereits vor Austragen der Dichtstoffe statt. Bei diesen Nebenreaktionen handelt es sich vordergründig um Austauschreaktionen, zwischen den Organosilan-Haftvermittlern und weiteren Silanen, insbesondere mit den in der Zusammensetzung ebenfalls vorhandenen Silan-Vernetzern. Dies kann sich beispielsweise nicht nur auf die Funktion des Haftvermittlers, sondern auch die Funktion der ebenfalls vorhandenen Silan-Vernetzer auswirken. Insbesondere haben die Austauschreaktionen zur Folge, dass der Haftvermittler verbraucht wird.

Beispielsweise ist aus dem Stand der Technik bekannt, dass während der Compoundierung der Dichtungsmassen, die verschiedene Silan-Härter oder Silan-Härter in Kombination mit Organosilan-Haftvermittlern enthalten, ein reger Substituenten-austausch zwischen den Silanen stattfindet.

In diesem Zusammenhang werden in der WO 2016/146685 A1 neue und stabile Silane als Vernetzer, die mindestens einen speziellen α-Hydroxycarbonsäureamid Rest enthalten, deren Herstellung sowie die zugehörigen härtbaren Zusammensetzungen offenbart. Die Herstellung der neuen Vernetzertypen erfolgt hierbei durch Austauschreaktionen zwischen Aminosilanverbindungen und Silanen der allgemeinen Formel Si(R¹)ₘ(R²)₄₋ₘ.

Diese Zusammensetzungen enthalten demnach in Summe eine erhöhte Konzentration an Aminosilanverbindungen als Haftvermittler, die neben ihren haftenden Eigenschaften gleichzeitig die Vernetzer stabilisieren.

Hierbei ergibt sich ferner der Nachteil, dass bei einem unkontrollierten Austausch Verbindungen entstehen können, die als Abgangsgruppen während des Aushärtens beispielsweise unkontrolliert freigesetzt werden.

Aus der WO 2018/011360 A1 sind Vernetzer-Haftvermittler-Kombinationen bekannt. Der negative Einfluss reaktiver Amingruppen wurde hierbei durch den Einsatz besonderer azyklischer Haftvermittlerstrukturen in Kombination mit speziellen Vernetzern aufgehoben.

Der Anwendungsbereich ist allerdings auf spezielle Verbindungen beschränkt und es ist daher wünschenswert eine größere Auswahl an potentiell geeigneten Haftvermittlern einsetzen zu können.

In der US 2018/0066165 A1 sind Materialien beschrieben, umfassend Reaktionsprodukte eines cyclischen Azasilans mit Wasser und einer Verbindung oder einem Polymer, enthaltend ein Isocyanat oder eine Epoxy-funktionale Gruppe, sowie Verfahren zu deren Synthese.

Aufgabe der Erfindung ist es demnach mindestens einen der beschriebenen Nachteile zu überwinden.

Diese Aufgabe wird durch die in Anspruch 1 bis 12 angegebenen Zusammensetzungen, das in Anspruch 13 angegebene Verfahren und die in den Ansprüchen 14 und 15 angegebenen Verwendungen gelöst.

Vorteilhafte Ausgestaltungen der Erfindung werden nachfolgend im Einzelnen erläutert.

Die erfindungsgemäße Zusammensetzung enthält
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4-bis C14-Arylgruppe bedeutet,
   m eine ganze Zahl von 0 bis 2 ist,
   jeder R unabhängig voneinander ausgewählt ist aus der Gruppe bestehend aus
      - einem Hydroxycarbonsäureesterrest mit der allgemeinen Strukturformel (I): 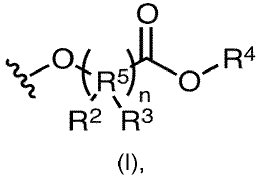 wobei
         jeder R² unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         jeder R³ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         R⁴ eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe, eine C5- bis C15-Aralkylgruppe oder eine C4- bis C14-Arylgruppe bedeutet, R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
         n eine ganze Zahl von 0 bis 10 ist,
      - -einem Hydroxycarbonsäureamidrest der allgemeinen Strukturformel (II): 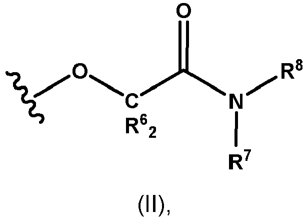 wobei
         jeder R⁶ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         jeder R⁷ oder R⁸ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeuten,
      - O-C(O)-R⁹, wobei R⁹ H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4- bis C14-Arylgruppe bedeutet und
      - O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4-bis C14-Arylgruppe bedeuten, und
b. mindestens ein Organosilan als Wasserfänger, Alkoholfänger und/oder Hydroxid-lonenfänger, wobei das Organosilan
   b1. ein heterozyklisches Organosilan ist, wobei mindestens ein Siliziumatom und mindestens ein Heteroatom direkt miteinander verknüpft sind und das Heteroatom ausgewählt ist aus der Gruppe bestehend aus N, P, S oder O oder
   b2. ein oder mehrere Organosilane sind, ausgewählt aus der Gruppe aus Iminosilanen der allgemeinen Strukturformel (VII), Silanoaminosilanen der allgemeinen Strukturformel (VIII), Aminoschutzgruppen-haltigen Organosilanen (IXa) bis (IXe) abgeleitet von der allgemeinen Strukturformeln (IX) oder Mischungen davon: 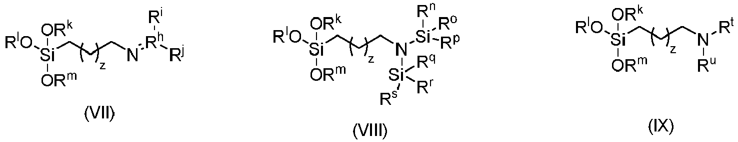 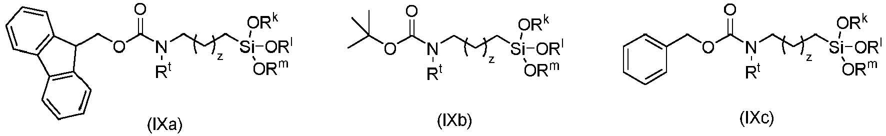 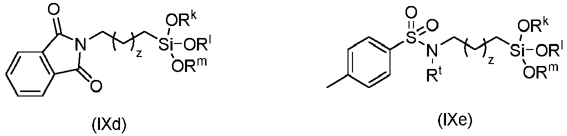 wobei
      - R^{h} C oder Si ist;
      - jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder Rⁿ, R^{o}, R^{p}, R^{q}, R', R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R', R^{u} unabhängig voneinander H, -OR', -C(O)Rⁱ, -C(O)CF₃, -COOR', eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet undz eine ganze Zahl von 1 bis 30 ist und
c. optional wenigstens ein Organopolysiloxan.

Überraschend wurde gefunden, dass die Verwendung von Organosilanen gemäß den Patentansprüchen, insbesondere heterozyklischer Organosilane, Silikonkautschukmassen hervorbringt, die verbesserte Haftvermittlungseigenschaften aufweisen. Dabei können diese Organosilane nach Aktivierung als Haftvermittler eingesetzt werden. Die Aktivierung kann je nach Verbindung durch Ringöffnung (im Falle der heterozyklischen Organosilane) oder z.B. durch Abspaltung von Schutzgruppen oder anderen Spaltprodukten erfolgen. Nach der Aktivierung liegt das Organosilan als primäres oder sekundäres Amin vor. Dies kann dann als Haftvermittler dienen.

Es ist nicht nötig die Organosilane, insbesondere heterozyklischen Organosilane im Überschuss einzusetzen. Sie können in geringen Konzentrationen vorliegen, da Nebenreaktionen, die bei den herkömmlichen nicht zyklischen Haftvermittlern mit Silan-Vernetzern regelmäßig beobachtet werden, inhibiert werden können. Sie eignen sich zusätzlich als Wasserfänger, Alkoholfänger oder Hydroxid-lonenfänger und können so gleichzeitig die Lagerstabilität der Silikonkautschukmassen verbessern.

In einer besonders bevorzugten Ausführungsform der Erfindung enthält die Zusammensetzung daher maximal 3 Gew.%, bevorzugt maximal 2 Gew.-%, weiter bevorzugt maximal 1,5 Gew.-%, insbesondere bevorzugt maximal 1,1 Gew.-% Organosilane, insbesondere heterozyklische Organosilane, jeweils bezogen auf das Gesamtgewicht der Zusammensetzung.

Es hat sich gezeigt, dass Silikonkautschukmassen, insbesondere die Dichtstoffformulierungen, enthaltend die erfindungsgemäße Zusammensetzung besonders vorteilhafte Haftung auf verschiedenen Untergründen, wie beispielsweise auf Glas, Metall, und unterschiedlichen Polymeren, insbesondere Polyamid, Polystyrol oder Metzoplast zeigen. Dabei wird die verbesserte Haftung bevorzugt bereits bei niedrigen Konzentrationen der Haftvermittler erreicht.

Die verbesserte Haftung wird in einer weiter bevorzugten Ausführungsform bereits bei einem Anteil der Organosilane, insbesondere heterozyklischer Organosilane, von 0,25 Gew% bis 3 Gew.-%, bevorzugt von 0,25 Gew.-% bis 2 Gew.-%, besonders bevorzugt von 0,5 Gew.-% bis 1,5 Gew.-%, insbesondere bevorzugt von 0,8 Gew.-% bis 1,2 Gew.-%, bezogen auf das Gesamtgewicht der Silikonkautschukmassen beobachtet.

Ferner wurde gefunden, dass die erfindungsgemäßen Zusammensetzungen eine hohe Lagerstabilität zeigen. Weiterhin weisen die resultierenden Silikonkautschukmassen, insbesondere Dichtstoffformulierungen, vorteilhafte Eigenschaften, insbesondere eine gute Reißfestigkeit, sowie einen angenehmen Geruch auf und sind farblos und transparent. Ohne an eine wissenschaftliche Theorie gebunden sein zu wollen, scheint der Effekt der erfindungsgemäßen Zusammensetzung auf die besondere chemische Struktur der Organosilane, insbesondere heterozyklischen Organosilane, zurückführbar zu sein. Insbesondere können wohl die bei Silanen in der Fachwelt bekannten Austauschreaktionen zwischen den Vernetzern und Haftvermittlern unterbunden werden. Dabei scheint der potentielle Haftvermittler nicht verbraucht zu werden und steht somit vollständig für die Haftvermittlung nach Austragen der Dichtstoffformulierungen zur Verfügung. Die erfindungsgemäßen Kombinationen der Härter mit Organosilanen, insbesondere heterozyklischen Organosilanen, scheinen ferner eine hohe Kompatibilität zueinander aufzuweisen. Neben den haftvermittelnden Eigenschaften der hydrolysierten Organosilane, insbesondere der hydrolysierten heterozyklischen Organosilane nach Austragen der Dichtstoffformulierung, können diese Verbindungen bevorzugt auch als Wasser-, Alkohol-, oder Hydroxidionenfänger wirken. Dadurch wird insbesondere die erhöhte Stabilität der erfindungsgemäßen Zusammensetzung begründet.

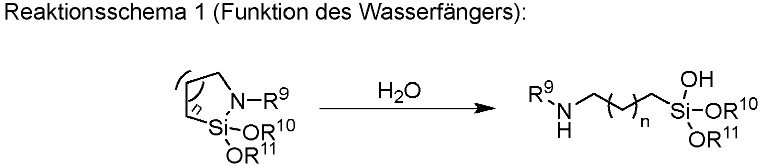

Die erfindungsgemäße Verwendung der heterozyklischen Organosilane und dessen Reaktion als Wasserfänger ist am Reaktionsschema 1 verdeutlicht. Die zunächst zyklische Verbindung öffnet sich unter Addition von Wasser. Durch den Einsatz solcher "maskierter Aminosilane" ist es überraschenderweise möglich, dass diese in einer Reaktion als Wasser, Alkohol-, oder Hydroxidionenfänger fungieren und so in einer erfindungsgemäßen Zusammensetzung als Stabilisator wirken und somit vorteilhafte Silikonkautschukmassen hervorbringen.

Vorteilhafterweise handelt es sich bei den erfindungsgemäß einsetzbaren Organosilanen um Aminosilanverbindungen nach einer der allgemeinen Strukturformeln (III), (Illa), (IIIb), (IV), (IVa), (V), (Va), (VI), (Vla) und/oder (VII) (siehe unten) oder Mischungen daraus. Diese sind besonders geeignet, die Funktion von Wasser-, Alkohol-, oder Hydroxidionenfänger in der erfindungsgemäßen Zusammensetzung auszuüben.

Alternativ können die Organosilane, insbesondere maskierte Aminosilane, ausgewählt sein aus der Gruppe bestehend aus Iminosilanen der allgemeinen Strukturformel (VII), Silanoaminosilanen der allgemeinen Strukturformel (VIII), Aminoschutzgruppen-haltigen Organosilanen (IXa) bis (IXe) abgeleitet von der allgemeinen Strukturformel (IX) oder Mischungen davon: 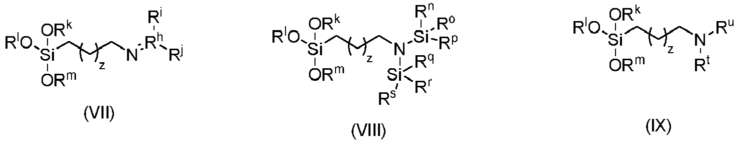 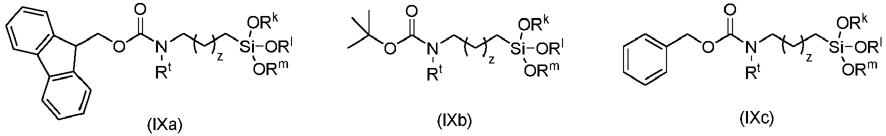 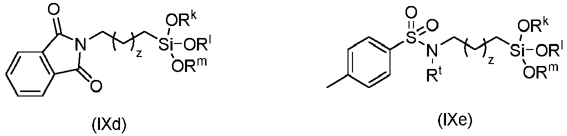 wobei
- R^{h} C oder Si ist;
- jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder Rⁿ, R^{o}, R^{p}, R^{q}, R^{r}, R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R', R^{u} unabhängig voneinander H, -OR', -C(O)Rⁱ, -C(O)CF₃, -COORⁱ, eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet und
- z eine ganze Zahl von 1 bis 30 ist.

In einer bevorzugten Ausführungsform beinhaltet die erfindungsgemäße Zusammensetzung mindestens ein maskiertes Aminosilan einer der obigen Definitionen.

Weiterhin überraschend wurde gefunden, dass die erfindungsgemäßen Organosilane, insbesondere heterozyklischen Organosilane, bevorzugt geeignet sind, um die Geruchsbelastung von unterschiedlichen Vernetzern, insbesondere Oximvernetzern herabzusetzen. Werden bestimmte heterozyklische Organosilane, die vorzugsweise Trialkylsilylgruppen tragen, härtbaren Zusammensetzungen zugesetzt, die Vernetzer mit übelriechenden Abgangsgruppen, insbesondere Oximvernetzer enthalten, kann die Geruchsbelastung vermindert, wenn nicht sogar vollständig neutralisiert werden. Ohne an eine wissenschaftliche Theorie gebunden zu sein, scheint das heterozyklische Organosilan derart mit den Abgangsgruppen zu reagieren, dass Strukturen erhalten werden, die eine verminderte, vorzugsweise keine olfaktorische Belastung darstellen. Die heterozyklischen Organosilane scheinen dabei als Trialkylsilyl-Übertragungsreagenzien zu wirken.

Ein übliches Trimethylsilyl-Übertragungsreagenz, wie beispielsweise 1,3-Bis(trimethylsilyl)urea (BSU) kann demnach bevorzugt den erfindungsgemäßen Zusammensetzungen zugesetzt werden.

Praktische Versuche haben gezeigt, dass die die Übertragungsreagenzien ebenfalls als Stabilisatoren wirken können und sich somit nicht nur positiv auf die olfaktorische Beschaffenheit der resultierenden Dichtstoffe auswirken, sondern auch einen positiven Einfluss auf die Lagerstabilität der Zusammensetzungen haben können.

Überraschend hat sich ferner gezeigt, dass bestimmte Organosilane, insbesondere heterozyklische Organosilane neben ihren haftvermittelnden Eigenschaften ebenfalls als Stabilisatoren verwendet werden können. Somit enthalten die erfindungsgemäßen Zusammensetzungen bevorzugt heterozyklische Organosilane, die an mindestens einem Heteroatom eine Trialkylsilylgruppe, insbesondere eine Trimethylsilylgruppe tragen.

Weiter bevorzugte Stabilisatoren wären hierbei Dialkoxy(trialkylsilyl)azasilacycloalkyle, besonders bevorzugte Verbindungen sind ausgewählt aus der Gruppe bestehend aus 2,2-Dimethoxy-1-(trimethylsilyl)aza-2-silacyclopentan, 2,2-Diethoxy-1-(trimethylsilyl)aza-2-silacyclopentan, 2,2-Dimethoxy-1-(trimethylsilyl)aza-2-silacyclohexan, 2,2-Diethoxy-1-(trimethylsilyl)aza-2-silacyclohexan, 2,2-Dimethoxy-1-(triethylsilyl)aza-2-silacyclopentan, 2,2-Diethoxy-1-(triethylsilyl)aza-2-silacyclopentan, 2,2-Dimethoxy-1-(triethylsilyl)aza-2-silacyclohexan und 2,2-Diethoxy-1-(triethylsilyl)aza-2-silacyclohexan, insbesondere bevorzugt sind 2,2-Dimethoxy-1-(trimethylsilyl)aza-2-silacyclopentan und 2,2-Diethoxy-1-(trimethylsilyl)aza-2-silacyclopentan.

Unter "Vernetzern" werden insbesondere vernetzungsfähige Silanverbindungen, verstanden, die mindestens zwei durch Hydrolyse abspaltbare Gruppen aufweisen. Beispiele für derartige vernetzungsfähige Silanverbindungen sind Si(OCH₃)₄, Si(CH₃)(OCH₃)₃ und Si(CH₃)(C₂H₅)(OCH₃)₂. Vernetzer können auch als Härter bezeichnet werden. "Vernetzer" umfasst insbesondere auch "Vernetzersysteme", die mehr als eine vernetzungsfähige Silanverbindung enthalten können.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Der Begriff "Dichtstoff" wie hierhin verwendet beschreibt die ausgehärtete erfindungsgemäße Zusammensetzung nach einem der Ansprüche.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen, die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel -CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Alkinylgruppen" bezeichnen Kohlenwasserstoffketten, die mindestens eine Dreifachbindung entlang der Kette enthalten. Beispielweise weist eine Alkinylgruppe mit einer Dreifachbindung insbesondere die allgemeine Formel -CₙH₂ₙ₋₂ auf. Alkinylgruppen können jedoch auch mehr als eine Dreifachbindung aufweisen. Alkyinylgruppen können insbesondere auch neben einer Alkinylgruppe zusätzlich eine Alkenylgruppe aufweisen. Die Bezeichnung "C2- bis C16-Alkinylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Dreifachbindungen und optional der Doppelbindungen in der Alkinylgruppe. Beispiele für Alkinylgruppen sind Ethin, Propin-, 1-Butin-, 2-Butin- und Hexin-, 3-Methyl-1-butin- 2-Methyl-3-pentynyl-.

"Geradkettige Alkinylgruppen" bezeichnen Alkinylgruppen, die keine Verzweigungen enthalten. Beispiele für geradkettige Alkinylgruppen sind Ethin-, Propin-, 1-Butin-, 2-Butin- und Hexin-.

"Verzweigte Alkinylgruppen" bezeichnen Alkinylgruppen die nicht geradkettig sind, in denen also insbesondere die Kohlenwasserstoffkette eine Gabelung aufweist. Beispiele für verzweigte Alkinylgruppen sind 3-Methyl-1-Butinyl-, 4-Methyl-2-hexinyl- und 2-Ethyl-3-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn das nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* eine aromatische Gruppe mit 6 Kohlenstoffatomen, insbesondere Benzol, ist, zwei Wasserstoffatome von der aromatische Gruppe, insbesondere von Benzol, entfernt sein, um eine Eingliederung in die Strukturformel zu erlauben.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nichtaromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn das nicht speziell angegeben ist.

Ein "Ring" bezeichnet zyklische Verbindungen, die ausschließlich aus Kohlenwasserstoffen und/oder teilweise oder vollständig aus Heteroatomen bestehen. Die Heteroatome sind dabei bevorzugt ausgewählt aus der Gruppe bestehend aus Si, N, P, S oder O. Bevorzugt sind auch aromatische Verbindungen eingeschlossen. Insbesondere schließt ein Ring die erfindungsgemäßen heterozyklischen Organosilane gemäß der Ansprüche mit ein.

Der Begriff "Ringatom" bezeichnet Atome, die Teil einer zyklischen Struktur sind.

"Organosilan" bedeutet eine Verbindung, die aus mindestens einem Kohlenstoffatom und mindestens einem Siliziumatom besteht.

Der Begriff "heterozyklisches Organosilan" bezeichnet einen Heterozyklus, der mindestens ein Siliziumatom und mindestens ein weiteres Heteroatom enthält. Insbesondere kann das Heteroatom direkt mit dem Siliziumatom verknüpft sein.

Ein "Heterozyklus" bezeichnet ein cyclisches Ringsystem, das 1 bis 10 Heteroatome, bevorzugt ausgewählt aus der Gruppe bestehend aus Si, N, P, S oder O enthält.

Sofern nichts anderes angegeben ist, bezeichnet H insbesondere Wasserstoff, N bezeichnet insbesondere Stickstoff. Ferner bezeichnet O insbesondere Sauerstoff, S bezeichnet insbesondere Schwefel, P bezeichnet insbesondere Phosphor, sofern nichts anderes angegeben ist.

Der Begriff "Primärbindung" bezeichnet einen Überbegriff für eine Klasse chemischer Bindungsarten. Dabei gehören zu den Primärbindungen die lonenbindung, die Molekülbindung (i.e. kovalente Bindung) und die Metallbindung.

"Sekundärbindungen" bezeichnen einen Überbegriff für eine Klasse chemischer Bindungen. Zu den Sekundärbindungen zählen insbesondere die Wasserstoffbrückenbindung, die Dipol-Dipol-Bindung und die Van-der-Waals-Bindung.

"Optional substituiert" bedeutet, dass in der entsprechenden Gruppe oder in dem entsprechenden Rest Wasserstoffatome durch Substituenten ersetzt sein können. Substituenten können insbesondere ausgewählt sein aus der Gruppe bestehend aus C1-bis C4-, Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette bzw. dem Hauptgerüst der Verbindung verbunden ist.

Der Begriff "Organopolysiloxan" beschreibt eine erfindungsgemäße Zusammensetzung, die zumindest eine Organosilikonverbindung, vorzugsweise zwei, drei oder mehrere verschiedene Organosilikonverbindungen, enthält. Eine in der Zusammensetzung enthaltene Organosilikonverbindung ist bevorzugt eine oligomere oder polymere Verbindung. Die polymere Organosilikonverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxylterminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfasst sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder es werden α,ω-dihydroxyl-terminierte Polydiorganosiloxane mit durch hydroxyl- und/oder aminogruppensubstituierten organischen Substituenten an den Siliziumatomen, verwendet.

Besonders bevorzugte Beispiele für eine Organosilikonverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden.

Als "Füllstoffe" können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotropiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

"Weichmacher" sind Additive, die die Verformbarkeit oder Viskosität des Materials beeinflussen können. Sie können einer Zusammensetzung zugegeben werden, um die phsikochemischen Eigenschaften des Materials zu verändern. Geeignete Vertreter solcher Weichmacher sind zum Beispiel hoch siedende Ester mehrbasischer Säuren, wie beispielsweise Zitronensäureester, Phthalsäureester, Phosphorsäurederivate, insbesondere Verbindungen der Formel O=P(OR)₃, wobei R Alkyl-, Alkoxyalkyl-, Phenyl-, oder Aralkyl bedeutet, insbesondere isopropyl-phenyl, Phosphonsäurederivate, insbesondere Phosphorigsäureester oder Salze der Phosphonsäuren, Fettsäurederivate, Fumarsäurederivate, Glutaminsäurederivate, insbesondere Ester oder Salze der Glutaminsäure, hochsiedende Alkohole, wie Polyole, insbesondere Glykole, Polyglykole und Glycerol, wobei diese gegebenenfalls terminal verestert sein können. Sulfonsäurederivate, wie Toluolsulfonamide, Epoxyderivate, vorzugsweise epoxidierte natürliche Öle, wie beispielsweise Verbindungen der allgemeinen Formel CH₃ --(CH₂)n --A--(CH₂)n --R wobei A bevorzugt ein Alken mit einer oder mehreren Doppelbindungen umfasst, (z.B. ungesättige Fettsäuren), n ist maximal 25 and R bedeutet C2 bis C15 Alkyl, epoxidierte Fettsäureesterderivate, epoxidiertes Sojabohnenöl, epoxidiertes Leinöl, Alkylepoxytallate, Alkylepoxysebacate, Rizinolate; Adipate; chloriertes Paraffinöl; Polyester, umfassend Polycaprolactone-triol; Glutarsäurepolyester; Adipinsäurepolyester; Silikonöle; Mischungen aus linearen oder verzweigten gesättigten Kohlenwasserstoffen, bevorzugt mit mindestens 9 Kohlenstoffatomen, insbesondere Mineralöle oder Kombinationen davon.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

In den vorgenannten Definitionen ergibt sich die notwendige Valenz des entsprechenden Bestandteils zur Eingliederung in eine Strukturformel, soweit nicht angegeben, für den Fachmann von selbst.

Es hat sich gezeigt, dass bestimmte Kombinationen von Vernetzertypen mit zyklischen Aminosilanen besonders vorteilhaft sind. Insbesondere bringen Sie Zusammensetzungen mit vorteilhaften Eigenschaften, wie eine verringerte Geruchsbelastung, besonders hohe Lagerstabilität oder verbesserte mechanische oder optische Eigenschaften hervor.

Daher enthält die erfindungsgemäße Zusammensetzung in einer weiteren Ausführungsform der Erfindung
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4-bis C14-Arylgruppe bedeutet,
   m eine ganze Zahl von 0 bis 2 ist,
   jeder R unabhängig voneinander ausgewählt ist aus der Gruppe bestehend aus
      - einem Hydroxycarbonsäureesterrest mit der allgemeinen Strukturformel (I): 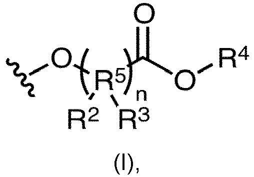 wobei
         jeder R² unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         jeder R³ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         R⁴ eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe, eine C5- bis C15-Aralkylgruppe oder eine C4- bis C14-Arylgruppe bedeutet, R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
         n eine ganze Zahl von 0 bis 10 ist,
      - O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4-bis C14-Arylgruppe bedeuten,
      und
b. mindestens ein Organosilan als Wasserfänger, Alkoholfänger und/oder Hydroxid-lonenfänger, wobei das Organosilan
   b1. ein heterozyklisches Organosilan ist, wobei mindestens ein Siliziumatom und mindestens ein Heteroatom direkt miteinander verknüpft sind und das Heteroatom ausgewählt ist aus der Gruppe bestehend aus N, P, S oder O oder
   b2. ein oder mehrere Organosilane sind, ausgewählt aus der Gruppe aus Iminosilanen der allgemeinen Strukturformel (VII), Silanoaminosilanen der allgemeinen Strukturformel (VIII), Aminoschutzgruppen-haltigen Organosilanen (IXa) bis (IXe) abgeleitet von der allgemeinen Strukturformeln (IX) oder Mischungen davon: 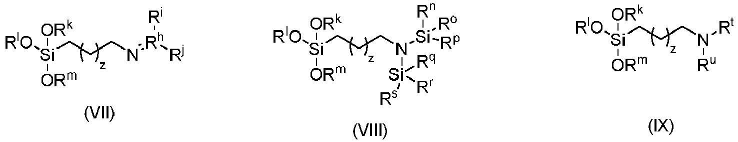 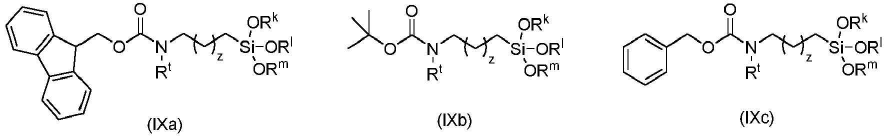 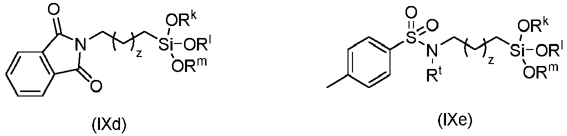 wobei
      - R^{h} C oder Si ist;
      - jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder Rⁿ, R^{o}, R^{p}, R^{q}, R^{r}, R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R', R^{u} unabhängig voneinander H, -OR', -C(O)Rⁱ, -C(O)CF₃, -COOR', eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet undz eine ganze Zahl von 1 bis 30 ist und
c. optional wenigstens ein Organopolysiloxan.

Die ausgezeichnete Haftung der resultierenden erfindungsgemäßen Silikonkautschukmassen kann durch den Zusatz der Organosilane, insbesondere heterozyklischen Organosilane insbesondere in Kombination mit den erfindungsgemäßen Vernetzern bei niedrigen Konzentrationen erreicht werden.

Daher enthält die Zusammensetzung in einer besonders bevorzugten Ausführungsform der Erfindung maximal 3 Gew.%, bevorzugt maximal 2 Gew.-%, weiter bevorzugt maximal 1,5 Gew.-%, insbesondere bevorzugt maximal 1,1 Gew.-% Organosilane, insbesondere heterozyklische Organosilane, jeweils bezogen auf das Gesamtgewicht der Zusammensetzung.

Die verbesserte Haftung wird in einer weiter bevorzugten Ausführungsform bereits bei einem Anteil der Organosilane, insbesondere heterozyklischen Organosilane von 0,25 Gew% bis 3 Gew.-%, bevorzugt von 0,25 Gew.-% bis 2 Gew.-%, besonders bevorzugt von 0,5 Gew.-% bis 1,5 Gew.-%, insbesondere bevorzugt von 0,8 Gew.-% bis 1,2 Gew.-%, bezogen auf das Gesamtgewicht der Silikonkautschukmassen beobachtet.

Gemäß einer weiteren Ausführungsform der Erfindung enthält die Zusammensetzung ein heterozyklisches Organosilan, das vorzugsweise ein 4- bis 10-gliedriger Heterozyklus ist.

Es werden besonders vorteilhafte Eigenschaften der erfindungsgemäßen Zusammensetzungen erhalten, wenn die Ringgröße der heterozyklischen Organosilane 8 Atome, bevorzugt 7 Atome, weiter bevorzugt 6 Atome nicht überschreitet.

In einer besonders vorteilhaften Ausführungsform enthält die Zusammensetzung daher mindestens ein heterozyklisches Organosilan, dass ein 5- bis 6-gliedriger Heterozyklus ist.

In einer weiteren Ausführungsform kann der Heterozyklus maximal 5 Heteroatome enthalten. Dabei sind die Heteroatome insbesondere ausgewählt aus der Gruppe bestehend aus Si, N, P, S oder O, bevorzugt aus Si oder N.

Ferner kann es in bestimmten Fällen vorteilhaft sein, wenn das heterozyklische Organosilan ausschließlich aus Silizium und Heteroatomen besteht. In einer bevorzugten Ausführungsform sind diese Heteroatome dabei ausgewählt aus der Gruppe bestehend aus Si, N, P, S oder O, bevorzugt aus Si oder N.

In einer besonders bevorzugten Ausführungsform enthalten die erfindungsgemäßen Zusammensetzungen heterozyklische Organosilane, die einen Heterozyklus mit mindestens einem Stickstoffatom aufweisen.

Weiterhin kann es vorteilhaft sein die Peripherie der heterozyklischen Organosilane dahingehend zu modifizieren, dass der sterische Anspruch erhöht wird. Dazu kann gemäß einer Ausführungsform das heterozyklische Organosilan mit mindestens einem weiteren Ring verknüpft sein.

In einer besonders bevorzugten Ausführungsform sind heterozyklische Organosilane bevorzugt, die über eine kovalente Bindung mit mindestens einem weiteren Ring verknüpft sind.

Bevorzugt kann der Ring mittels Kondensationsreaktionen an die heterozyklischen Organosilane angefügt sein. Diese Art der Anfügung von weiteren Ringen ist in der Fachwelt bekannt und wir auch als *Anellierung* bezeichnet. Dabei teilen sich in den resultierenden Ringsystemen an der Fügestelle mindestens zwei, der ursprünglichen Ringe eine Atombindung.

Neben den anellierten Ringen können in einer weiteren Ausführungsform verbrückte Ringstrukturen vorteilhaft sein. Verbrückte Ringstrukturen enthalten insbesondere Ringatome, die sich zwei Atombindungen unterschiedlicher Ringe teilen und dabei nicht direkt benachbart sind. Beispiele für Moleküle die verbrückte Ringstrukturen enthalten sind die Norbornane oder ansa-Verbindungen.

Ferner sind auch solche Verbindungen umfasst, die Spiroatome enthalten. Diese Spiroverbindungen stellen insbesondere polyzyklische Verbindungen dar, deren Ringe nur an einem Atom, dem Spiroatom, miteinander verknüpft sind.

Das Siliziumatom der heterozyklischen Organosilane trägt gemäß einer besonders bevorzugten Ausführungsform mindestens einen OR^{d} Rest. Vorzugsweise ist dabei jeder R^{d} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe. Bevorzugt ist R^{d} ausgewählt aus der Gruppe bestehend aus H, einer optional substituierten geradkettigen oder verzweigten C1-bis C10 Alkylgruppe, einer optional substituierten geradkettigen oder verzweigten C2- bis C10 Alkenylgruppe, einer optional substituierten, geradkettigen oder verzweigten C2- bis C10 Heteroalkylgruppe, einer optional substituierten C3- bis C10 Cycloalkylgruppe, oder einer optional substituierten C4- bis C8-Aryl- oder Heteroarylgruppe. Besonders bevorzugt bedeutet R^{d} H, eine optional substituierte geradkettige oder verzweigte C1- bis C8 Alkylgruppe, eine optional substituierte geradkettige oder verzweigte C2- bis C8 Alkenylgruppe, eine optional substituierte, geradkettige oder verzweigte C4- bis C8 Heteroalkylgruppe, eine optional substituierte C4 bis C6 Cycloalkylgruppe oder eine optional substituierte C5- bis C6 Aryl- oder Heteroarylgruppe.

In einer weiteren Ausführungsform der Erfindung kann das Siliziumatom ferner mindestens einen NR^{d1}R^{d1} Rest tragen. Jeder R^{d1} ist hierbei unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4-bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe. Bevorzugt bedeutet R^{d1} H, oder eine optional substituierte geradkettige oder verzweigte C1- bis C10 Alkylgruppe, eine optional substituierte geradkettige oder verzweigte C2- bis C10 Alkenylgruppe, eine optional substituierte, geradkettige oder verzweigte C2- bis C10 Heteroalkylgruppe, eine optional substituierte C3- bis C10 Cycloalkylgruppe, oder einer optional substituierte C4- bis C8-Aryl- oder Heteroarylgruppe. Besonders bevorzugt ist R^{d1} H, eine optional substituierte geradkettige oder verzweigte C1-bis C8 Alkylgruppe, eine optional substituierte geradkettige oder verzweigte C2- bis C8 Alkenylgruppe, eine optional substituierte, geradkettige oder verzweigte C4- bis C8 Heteroalkylgruppe, eine optional substituierte C4 bis C6 Cycloalkylgruppe oder eine optional substituierte C5- bis C6 Aryl- oder Heteroarylgruppe.

In einer bevorzugten Ausführungsform kann das Heteroatom des zyklischen Organosilans in der erfindungsgemäßen Zusammensetzung auch direkt mit einem weiteren Organosilan, bevorzugt mit einem heterozyklischen Organosilan verbunden sein.

Dabei kann das Heteroatom mit dem Organosilan, insbesondere heterozyklischen Organosilan in einer weiter bevorzugten Ausführungsform über eine Sekundärbindung und/oder eine Primärbindung verknüpft sein. Besonders bevorzugt ist das Organosilan, insbesondere das heterozyklische Organosilan durch eine lonenbindung, eine kovalente Bindung und/oder eine Wasserstoffbrückenbindung verbunden. Insbesondere ist das Heteroatom mit dem Organosilan, insbesondere heterozyklischen Organosilan durch eine kovalente Molekülbindung mit dem Heteroatom verknüpft.

In einer weiteren Ausführungsform der Erfindung ist das Heteroatom des heterozyklischen Organosilans mit dem weiteren Organosilan, insbesondere heterozyklischen Organosilan über ein oder mehrere Kohlenstoffatome verbunden.

Die Verknüpfung kann in einer bevorzugten Ausführungsform über eine Sekundärbindung und/oder eine Primärbindung erfolgen. Besonders bevorzugt ist das Organosilan, insbesondere das heterozyklische Organosilan durch eine lonenbindung, eine kovalente Bindung und/oder eine Wasserstoffbrückenbindung verbunden. insbesondere ist das Heteroatom mit dem Organosilan, insbesondere heterozyklischen Organosilan durch eine kovalente Molekülbindung mit dem Heteroatom verknüpft.

In einer besonders bevorzugten Ausführungsform der Erfindung enthalten die erfindungsgemäßen Zusammensetzungen heterozyklische Organosilane, die mindestens eine der nachfolgenden Strukturformeln (III) bis (V) und (Illa) bis (Va) aufweisen:

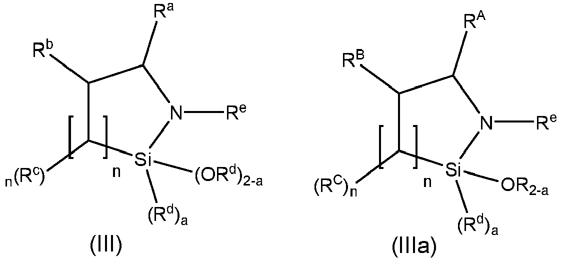

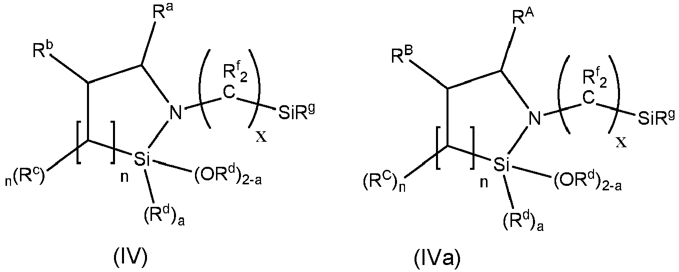

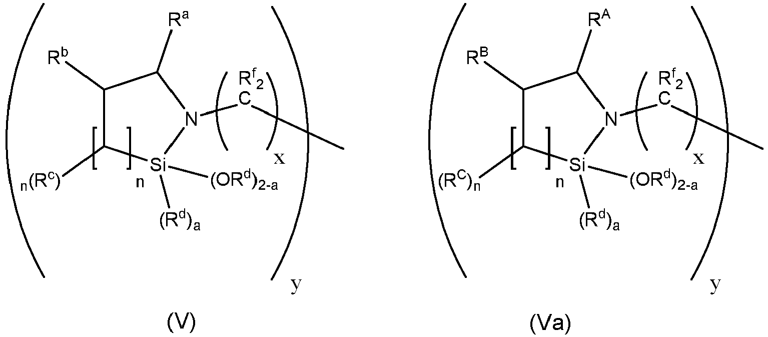

Der Parameter a in (R^{d})ₐ oder (R^{d1})ₐ bezeichnet das Verhältnis von Alkoxyresten zu Resten R^{d}, die wie hierin definiert sind. Dabei kann a Werte von 0 bis 2 annehmen. Ist a = 0 enthält das zugehörige heterozyklische Organosilan keinen R^{d} Rest und zwei OR^{d} Reste. Der Parameter a kann auch 1 sein. In diesem Fall ist ein R^{d} Rest und ein OR^{d} Rest direkt mit dem Siliziumatom des heterozyklischen Organosilans verbunden. Bei a = 2 sind wiederum ausschließlich R^{d} Reste und keine OR^{d} Reste mit dem Siliziumatom verknüpft;
x bezeichnet in den erfindungsgemäßen Strukturformeln (IV), (IVa), (V) oder (Va) die Kettenlänge der Kohlenstoffkette (CR^{f}₂), die mit dem Stickstoffatom des heterozyklischen Organosilans verbunden ist. Dabei kann x Werte von 0,1 bis 100,0, bevorzugt von 0,1 bis 30,0, besonders bevorzugt von 0,5 bis 10,0 annehmen; y bestimmt in den Strukturformeln (V) und (Va) die Anzahl der einzelnen miteinander direkt oder über eine Kohlenstoffkette verbundenen heterozyklischen Organosilane und kann Werte von 1,0 bis 1000,0, bevorzugt von 1,0 bis 100,0, besonders bevorzugt von 1,0 bis 30,0, insbesondere von 1,0 bis 10,0 annehmen.

Soweit nicht anders angegeben sind in den angegebenen Bereichen der x oder y Werte alle denkbaren Dezimalzahlen, insbesondere ganzzahlige und halbzahlige Werte für x oder y eingeschlossen.

Die Ringgröße der heterozyklischen Organosilane in jeder der allgemeinen Strukturformeln (III) bis (V) und (Illa) bis (Va) ist dabei durch den Parameter n in den Strukturen festgelegt. Aus den Strukturformeln und n ergeben sich mögliche Ringgrößen von 4 (bei n = 0) bis 10 (bei n = 6).

Die Reste (R^{c})ₙ in den Strukturformeln (III) bis (V) und (R^{C})ₙ aus den Sturkturformeln (Illa) bis (Va) stehen jeweils in direktem Zusammenhang mit der Ringgröße, die durch den Parameter n bestimmt wird. Die mögliche Anzahl der Reste an den Ringatomen wird hier auch durch den Wert n angepasst. Liegt beispielsweise ein 6 Ring vor ist n = 2 und die Anzahl der Reste R^{c} oder R^{C} wird entsprechend auf 2 angepasst. So kann jedes Ringatom einen Rest tragen.

Das heterozyklische Organosilan kann an jedem Ringatom unterschiedliche Reste tragen, jeder R^{a}, R^{b}, R^{c}, R^{d}, R^{e}, R^{f} oder R^{g} aus den Strukturformeln (III), (IV) oder (V) ist dabei unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe. Bevorzugt bedeutet R^{d1} H, oder eine optional substituierte geradkettige oder verzweigte C1- bis C10 Alkylgruppe, eine optional substituierte geradkettige oder verzweigte C2- bis C10 Alkenylgruppe, eine optional substituierte, geradkettige oder verzweigte C2- bis C10 Heteroalkylgruppe, eine optional substituierte C3- bis C10 Cycloalkylgruppe, oder einer optional substituierte C4- bis C8-Aryl- oder Heteroarylgruppe. Besonders bevorzugt ist R^{d1} H, eine optional substituierte geradkettige oder verzweigte C1- bis C8 Alkylgruppe, eine optional substituierte geradkettige oder verzweigte C2- bis C8 Alkenylgruppe, eine optional substituierte, geradkettige oder verzweigte C4- bis C8 Heteroalkylgruppe, eine optional substituierte C4 bis C6 Cycloalkylgruppe oder eine optional substituierte C5- bis C6 Aryl- oder Heteroarylgruppe.

Alternativ können die heterozyklischen Organosilane neben den soeben beschriebenen Substitutionsmustern auch weitere Ringe tragen;
Die Ringe können sich derart ausbilden, dass jeder R^{A} und R^{B} oder R^{A} und (R^{C})ₙ der Strukturformeln (Illa), (IVa) oder (Va) zusammengenommen einen 4- bis 10-gliedrigen Ring, bevorzugt einen 5- bis 8-gliedrigen Ring, insbesondere bevorzugt einen 5- bis 6-gliedrigen Ring bilden.

In einer weiteren Ausführungsform kann alternativ R^{B} und jeder der möglichen (R^{C})ₙ in den Strukturformeln (Illa), (IVa) oder (Va) zusammengenommen einen 4- bis 10-gliedrigen Ring, bevorzugt einen 5- bis 8-gliedrigen Ring, insbesondere bevorzugt einen 5- bis 6-gliedrigen Ring bilden.

In einer weiter bevorzugten Ausführungsform der Erfindung können die erfindungsgemäßen Zusammensetzungen ein oder mehrere Organosilane enthalten ausgewählt aus der Gruppe bestehend aus Iminosilanen der allgemeinen Strukturformel (VII), Silanoaminosilanen der allgemeinen Strukturformel (VIII), nicht zyklischen Organosilanen der allgemeinen Strukturformel (IX), Aminoschutzgruppen-haltige Organosilanen (IXa) bis (IXe) abgeleitet von der allgemeinen Strukturformeln (IX) oder Mischungen davon: 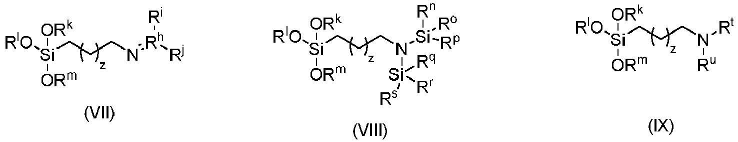 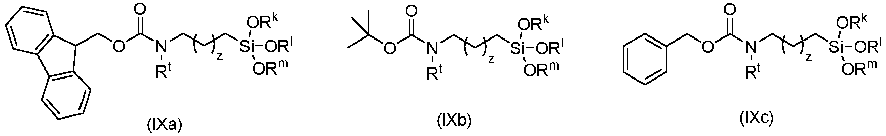 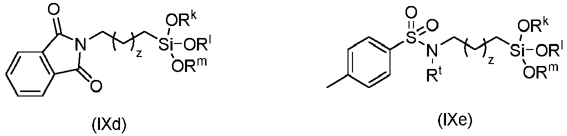 wobei
- R^{h} C oder Si ist;
- jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder Rⁿ, R^{o}, R^{p}, R^{q}, R^{r}, R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R', R^{u} unabhängig voneinander H, -OR', -C(O)Rⁱ, -C(O)CF₃, -COORⁱ, eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet und
- z eine ganze Zahl von 1 bis 30 ist

Wie bereits ausgeführt kann die Zusammensetzung bestimmte Organosilane, insbesondere heterozyklische Organosilane in Kombination mit Vernetzern, die übelriechende Abgangsgruppen aufweisen, enthalten. Die hierbei eingesetzten heterozyklischen Organosilane können hierbei als Haftvermittler und bevorzugt als Stabilisatoren oder SilylÜbertragungsreagenzien wirken.

Daher enthält die erfindungsgemäße Zusammensetzung in einer bevorzugten Ausführungsform der Erfindung
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4-bis C14-Arylgruppe bedeutet,
   m eine ganze Zahl von 0 bis 2 ist,
   jeder R unabhängig voneinander ausgewählt ist aus der Gruppe bestehend aus
      - O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4-bis C14-Arylgruppe bedeuten,
      und
b. mindestens ein heterozyklisches Organosilan folgender allgemeiner Strukturformeln 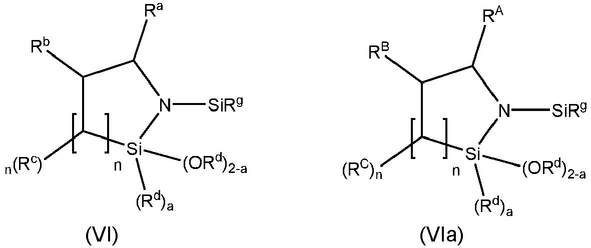 wobei a in (R^{d})ₐ oder (R^{d1})ₐ das Verhältnis von Alkoxyresten zu Resten R^{d} bezeichnet und wie hierin definiert ist. Die Ringatome in den Strukturformeln (VI) und (Vla) können unabhängig voneinander unterschiedliche Reste R^{a}, R^{b}, R^{c}, R^{d} oder R^{g} tragen, die wie hierin definiert sind.

Es hat sich gezeigt, dass Dichtstoffe mit besonders vorteilhaften Eigenschaften erhalten werden, wenn in einer bevorzugten Ausführungsform der Erfindung, die Reste R⁹ in den Strukturformeln (VI) und (Vla) ausgewählt sind aus der Gruppe bestehend aus einer optional substituierten, geradkettigen oder verzweigten C1- bis C6-Alkylgruppe, einer optional substituierten, geradkettigen oder verzweigten C2- bis C6 Alkenylgruppe, einer optional substituierten C3- bis C6-Cycloalkylgruppe, einer optional substituierten C4- bis C6-Cycloalkenylgruppe, einer optional substituierten, geradkettigen verzweigten oder zyklischen C4- bis C8 Alkinylgruppe, einer optional substituierten, geradkettigen oder verzweigten C1- bis C6 Heteroalkylgruppe, einer optional substituierten geradkettigen, verzweigten oder zyklischen C2- bis C6 Heteroalkenylgruppe oder einer optional substituierten C4- bis C6-Aryl oder Heteroarylgruppe, bevorzugt bestehend aus einer geradkettigen oder verzweigten C1- bis C6 Alkylgruppe einer geradkettigen oder verzweigten C2- bis C6-Alkenylgruppe, einer C5- bis C6-Cycloalkylgruppe oder einer C5-bis C6-Aryl oder Heteroarylgruppe, besonders bevorzugt bestehend aus Methyl-, Ethyl-, Propyl-, iso-Propyl-, n-Butyl-, iso-Butyl-, Ethenyl-, Propenyl-, Butenyl-, Cyclopentyl-, Cyclohexyl-, Cyclopentadienyl- oder Phenyl-.

Die Ringgröße der heterozyklischen Organosilane ist dabei durch den Parameter n in den Strukturen festgelegt, wobei n Werte zwischen 0 und 6 annehmen kann.

Die Reste (R^{c})ₙ der Strukturformel (VI) und (R^{C})ₙ der Strukturformel (VIa) stehen in direktem Zusammenhang mit der Ringgröße, die durch den Parameter n bestimmt wird. Die mögliche Anzahl der Reste an den Ringatomen wird hier auch durch den Wert n angepasst. Liegt beispielsweise ein 6 gliedriger Ring vor ist n = 2 und die Anzahl der Reste R^{c} oder R^{C} wird entsprechend auf 2 angepasst. So kann jedes Ringatom einen Rest tragen.

Zusammensetzungen enthaltend die vorstehenden Organosilane, isnbesondere heterozyklischen Organosilane weisen gute Eigenschaften, wie eine erhöhte Lagerstabilität, auf. Insbesondere zeigen diese Zusammensetzung eine ausgezeichnete Haftung auf verschiedenen Untergründen, bevorzugte Untergründe sind beispielsweise Glas, Aluminium, PVC, Blech, Stahl, Beton, Holz, lackiertes Holz, lasiertes Holz, Polyamid, Al/Mg-Legierung, Polystyrol und Metzoplast, bevorzugte Untergründe sind PVC, Polyamid, Polystyrol und Metzoplast, insbesondere bevorzugt sind Polystyrol und Metzoplast.

Gemäß einer bevorzugten Ausführungsform der Erfindung enthalten die weiteren Ringe der soeben beschriebenen heterozyklischen Organosilane der allgemeinen Strukturformel (Vla) in den erfindungsgemäßen Zusammensetzungen mindestens ein Heteroatom, wie beispielsweise Si, N, P, S oder O, bevorzugt sind Si, N oder S.

In einer Ausführungsform der Erfindung können die Zusammensetzungen auch heterozyklische Organosilane mit folgender Strukturformel enthalten:

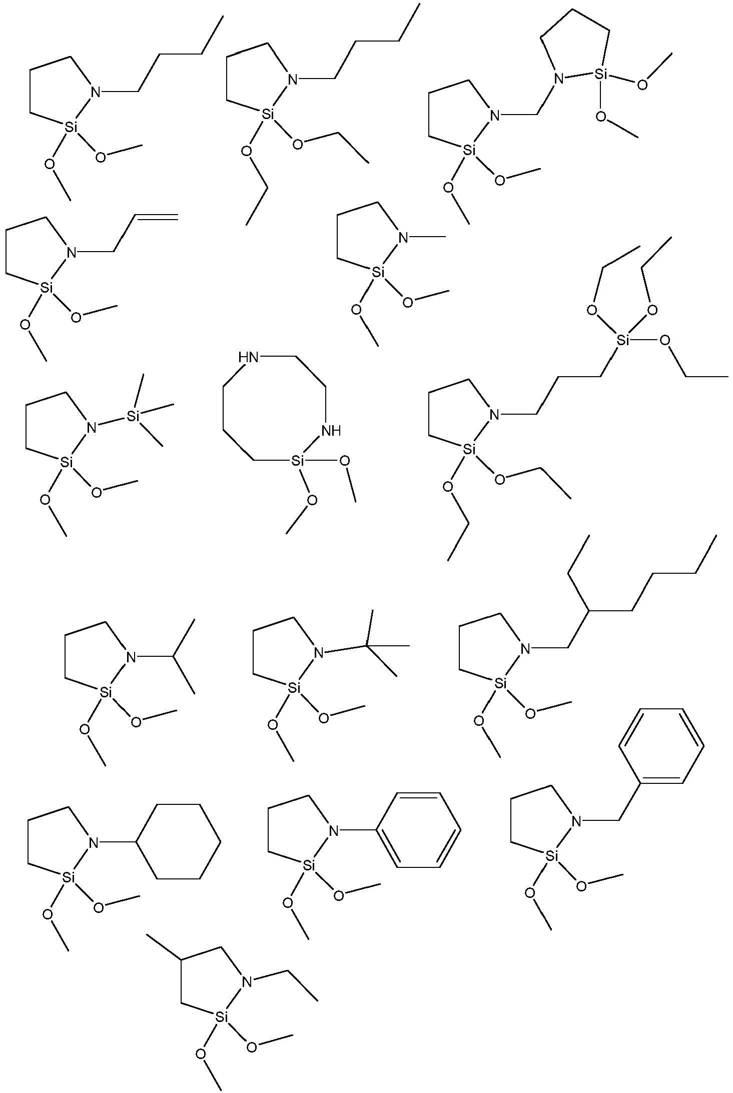

Gemäß einer weiteren Ausführungsform der Erfindung enthält die Zusammensetzung mindestens zwei heterozyklische Organosilane, wobei die heterozyklischen Organosilane wie hierin beschrieben definiert sein können.

Zusammensetzungen enthaltend mindestens ein weiteres Organosilan, insbesondere ein zyklisches Organosilan wie vorstehend beschrieben zeichnen sich insbesondere durch eine gute Stabilität, insbesondere bei Lagerung bei höheren Temperaturen, aus.

Die erfindungsgemäße Zusammensetzung enthält einen Härter enthaltend eine Verbindung mit der allgemeinen Strukturformel R¹ₘSi(R)₄₋ₘ, wobei m eine ganze Zahl von 0 bis 2 sein kann. Die Verbindung mit der allgemeinen Strukturformel R¹ₘSi(R)₄₋ₘ wird insbesondere auch als Silan bezeichnet. Somit kann der Härter also ein Silan enthalten, das über zwei, drei oder vier hydrolysierbare Gruppen verfügt. Bevorzugt ist m 0 oder 1, so dass der Härter ein Silan mit drei oder vier hydrolysierbaren Gruppen enthält. Auf diese Weise kann der Vernetzungsgrad des Härters gesteuert werden und die Lösemittelresistenz und/oder die mechanischen Eigenschaften von Silikonkautschukzusammensetzungen können eingestellt werden.

Für den Fall, dass m in der allgemeinen Strukturformel R¹ₘSi(R)₄₋ₘ nicht 0 ist, also das Silan nicht vier hydrolysierbare Gruppen R enthält, kann bevorzugt ein weiterer Rest R¹ vorhanden sein.

Ist m = 1 kann das Silan demnach drei hydrolysierbare Gruppen und einen Rest R¹ enthalten.

In der allgemeinen Strukturformel R¹ₘSi(R)₄₋ₘ kann m auch 2 sein. Dadurch weist die allgemeine Strukturformel zwei Reste R¹ auf. Die Reste R¹ können gleich oder verschieden voneinander sein. Durch die Wahl der Reste R¹ kann die Geschwindigkeit der Vernetzung gesteuert werden.

Gemäß einer Ausführungsform der Erfindung enthält die erfindungsgemäße Zusammensetzung Oligomere oder Polymere des Härters oder der Härter besteht daraus. Oligomere und Polymere des Härters können insbesondere mindestens zwei Verbindungen mit der allgemeinen Strukturformel R¹ₘSi(R)₄₋ₘ sein, in denen mindestens zwei Siliziumatome der verschiedenen Monomere über Siloxansauerstoffe miteinander verbunden sind. Entsprechend der Anzahl an verbindenden Siloxansauerstoffen am Siliziumatom ist der Anzahl der Reste R reduziert.

Beispielsweise kann es in erfindungsgemäßen Zusammensetzungen zu Austauschreaktionen zwischen den Gruppen R der verschiedenen Härter kommen. Diese Austauschreaktionen können insbesondere bis zu einem Gleichgewichtszustand ablaufen. Dieser Prozess kann auch als Equilibrierung bezeichnet werden.

Die voranstehend beschriebenen Austauschreaktionen, speziell die Equilibrierung, können insbesondere auch mit geeigneten Gruppen R^{Au} anderer in der erfindungsgemäßen Zusammensetzung enthaltener Silane stattfinden. Für Austauschreaktionen geeignete Gruppen R^{Au} sind beispielsweise Alkoxy-, Carboxylat-, Lactat-, Salicylat-, Amid-, Amin-, und Oximgruppen, um einige zu nennen. Dementsprechend können insbesondere die Gruppen R^{Au} von Silanen vom Typ (R¹ⁿ)_{z}Si(R^{AU})_{4-z} mit den Gruppen R des Härters Austauschreaktionen eingehen, wobei die Gruppen R^{ln} keine Austauschreaktionen eingehen und z eine ganze Zahl von 0 bis 3 ist. Dementsprechend können durch die Austauschreaktionen die verschiedenen geeigneten Gruppen R und R^{Au}, sofern sie vorhanden sind, auf die in einer erfindungsgemäßen Zusammensetzung enthaltenen, insbesondere in einer Silikonkautschukzusammensetzung enthaltenen, entsprechenden Silanverbindungen verteilt werden, wobei sich insbesondere ein Gleichgewichtszustand einstellen kann.

Gemäß einer bevorzugten Ausführungsform der Erfindung bedeutet in der allgemeinen Strukturformel R¹ₘSi(R)₄₋ₘ jeder R¹ unabhängig voneinander Methyl-, Ethyl-, Propyl-, Vinyl, Phenyl- oder Allylrest. Praktische Versuche haben gezeigt, dass Härter mit derartigen Resten Dichtstoffe mit guten mechanischen Eigenschaften ergeben. Ferner können Dichtstoffe mit Härtern mit derartigen Resten farblos und transparent sein.

In der allgemeinen Strukturformel R¹ₘSi(R)₄₋ₘ kann R ein Hydroxycarbonsäureesterrest mit der hierin beschriebenen allgemeinen Strukturformel (I) sein.

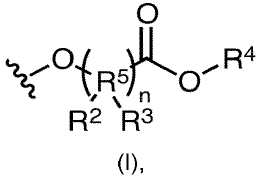

Gemäß einer Ausführungsform bedeutet in diesem Hydroxycarbonsäureesterrest jeder R² und R³ unabhängig voneinander H oder Methyl-, Ethyl-, Propyl-, Isopropyl-, Butyl-, n-Butyl, sec-Butyl-, iso-Butyl- und tert-Butyl-, Besonders bevorzugt ist im Hydroxycarbonsäureesterrest jeder R² und R³ ausgewählt aus der Gruppe bestehend aus H und Methyl. Dabei können für den Fall, dass n eine ganze Zahl größer als oder gleich 1 ist, R² und R³ für jedes Kohlenstoffatom der Kette unabhängig voneinander verschieden sein. Zusammensetzungen enthaltend einen Härter enthaltend derartige Verbindungen können insbesondere einen angenehmen Geruch zeigen und/oder sich gut compoundieren lassen.

Gemäß einer weiteren Ausführungsform ist R⁴ im Hydroxycarbonsäureesterrest ausgewählt aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

Zusammensetzungen, die einen Härter enthalten, der derartige Verbindungen aufweist, führen zu Dichtstoffen mit guten mechanischen Eigenschaften. Ferner lassen sie sich gut compoundieren. Die resultierenden Dichtstoffe können weiterhin transparent und farblos sein.

Wie weiter oben beschrieben sind an der aromatischen Gruppe beispielsweise zwei Wasserstoffatome entfernt, an deren Stelle die Estergruppe und die Alkoholfunktion gebunden sind, um so eine Eingliederung in die allgemeine Strukturformel (I) zu ermöglichen.

R⁵ kann auch C und jeder R² und R³ H bedeuten. Ferner kann R⁵ auch C und R² H und R³ Methyl- bedeuten. Für den Fall, dass im Hydroxycarbonsäureesterrest R⁵ C bedeutet und n eine ganze Zahl größer als 1 ist, so können R² und R³ für jedes Kohlenstoffatom der Kette unabhängig voneinander verschieden sein.

Gemäß einer bevorzugten Ausführungsform der Erfindung ist im Hydroxycarbonsäureesterrest n eine ganze Zahl von 1 bis 5, bevorzugt von 1 bis 3, insbesondere 1.

Gemäß einer weiteren Ausführungsform der Erfindung ist in der allgemeinen Strukturformel R¹ₘSi(R)₄₋ₘ R ausgewählt aus der Gruppe bestehend aus einem Glykolsäureesterrest, einem Milchsäureesterrest und einem Salicylsäureesterrest, wobei R⁴ jeweils eine optional substituierte, geradkettige oder verzweigte C1- bis C16-Alkylgruppe, insbesondere eine optional substituierte, geradkettige oder verzweigte C1- bis C12- oder C1- bis C8-Alkylgruppe, eine C4- bis C14-Cycloalkylgruppe, insbesondere eine C4- bis C10-Cycloalkylgruppe, eine C5- bis C15-Aralkylgruppe, insbesondere eine C5- bis C11-Aralkylgruppe, oder eine C4- bis C14-Arylgruppe, insbesondere eine C4- bis C10-Arylgruppe bedeutet. Dabei ist R⁴ insbesondere ausgewählt aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

Praktische Versuche haben ergeben, dass Zusammensetzungen enthaltend derartige Verbindungen Dichtstoffe mit guten mechanischen Eigenschaften ergeben. Ferner weisen Zusammensetzungen enthaltend derartige Verbindungen einen angenehmen Geruch auf, da sie bei der Hydrolyse Substanzen freisetzen, die einen angenehmen Geruch aufweisen. Außerdem können Dichtstoffe mit derartigen Härtern transparent und farblos sein.

Gemäß einer besonders bevorzugten Ausführungsform der Erfindung ist der Härter in der Zusammensetzung ausgewählt aus der Gruppe bestehend aus Tris(methyllactato)vinylsilan, Tris(ethyllactato)vinylsilan, Tris(ethylhexyllactato)vinylsilan, Tris(methylsalicylato)vinylsilan, Tris(ethylsalicylato)vinylsilan, Tris(ethylhexylsalicylato)-vinylsilan, Tris(2-ethylhexylsalicylato)vinylsilan, Tris(isopropylsalicylato)vinylsilan, Tris(methyllactato)methylsilan, Tris(ethyllactato)methylsilan, Tris(ethylhexyllactato)-methylsilan, Tris(methylsalicylato)methylsilan, Tris(ethylsalicylato)methylsilan, Tris(ethylhexylsalicylato)methylsilan, Tris(2-ethylhexylsalicylato)methylsilan, Tris(3-aminopropyl)methylsilan, Tris(5-aminopentyl)methylsilan, Tris(methyllactato)propylsilan, Tris(ethyllactato)propylsilan, Tris(ethylhexyllactato)propylsilan, Tris(ethylsalicylato)-propylsilan, Tris(ethylhexylsalicylato)propylsilan, Tris(2-ethylhexylsalicylato)propylsilan, Tris(isopropylsalicylato)propylsilan, Tris(3-aminopropyl)propylsilan, Tris(5-aminopentyl)-propylsilan, Tris(methyllactato)ethylsilan, Tris(ethyllactato)ethylsilan, Tris-(ethylhexyllactato)ethylsilan, Tris(methylsalicylato)-ethylsilan, Tris(ethylsalicylato)-ethylsilan, Tris(ethylhexylsalicylato)ethylsilan, Tris(2-ethylhexylsalicylato)ethylsilan, Tris(isopropylsalicylato)ethylsilan, Tris(3-aminopropyl)ethylsilan, Tris(5-aminopentyl)-ethylsilan, Tris(methyllactato)phenylsilan, Tris(ethyllactato)phenylsilan, Tris-(ethylhexyllactato)phenylsilan, Tris(methylsalicylato)phenylsilan, Tris(ethylsalicylato)-phenylsilan, Tris(ethylhexylsalicylato)phenylsilan, Tris(2-ethylhexylsalicylato)phenylsilan, Tris(isopropylsalicylato)phenylsilan, Tris(3-aminopropyl)phenylsilan, Tris(5-aminopentyl)-phenylsilan, Tetra(methyllactato)silan, Tetra(ethyllactato)silan, Tetra(ethylhexyllactato-)silan, Tetra(ethylhexylsalicylato)silan, Tetra(2-ethylhexylsalicylato)silan, Tetra-(methylsalicylato)silan, Tetra(isopropylsalicylato)silan, Tetra(ethylsalicylato)silan, Tetra(3-aminopropyl)silan, Tetra(5-aminopentyl)silan und Mischungen davon.

Neben der Verbindung mit der allgemeinen Strukturformel R¹ₘSi(R)₄₋ₘ kann der Härter zusätzlich eine Verbindung mit der allgemeinen Strukturformel R¹²ₒSi(R)₄₋ₒ enthalten, wobei jeder R¹² unabhängig voneinander eine optional substituierte, geradkettige oder verzweigte C1- bis C16-Alkylgruppe, insbesondere eine optional substituierte, geradkettige oder verzweigte C1- bis C12- oder eine C1- bis C8-Alkylgruppe oder eine Methyl- oder Propylgruppe, oder eine optional substituierte, geradkettige oder verzweigte C2- bis C16-Alkenylgruppe, insbesondere eine optional substituierte, geradkettige oder verzweigte C2-bis C12- oder eine C2- bis C8-Alkenylgruppe oder eine Vinylgruppe oder eine optional substituierte C4- bis C14-Arylgruppe oder eine Phenylgruppe ist und R gemäß einem der Ansprüche 1, 15 oder 21 definiert ist und o eine ganze Zahl von 0 bis 2 ist und wobei R¹ₘSi(R)₄₋ₘ und R¹²ₒSi(R)₄₋ₒ nicht gleich sein können.

In einer weiteren Ausführungsform ist die Zusammensetzung erhältlich durch Vermischen mindestens eines Härters, der wie hierin definiert ist oder eines Härtergemischs wie vorstehend beschrieben mit einem erfindungsgemäßen Organosilan, insbesondere einem heterozyklischen Organosilan, das wie hierin beschrieben definiert ist.

Beispielsweise kann die erfindungsgemäße Zusammensetzung eine Kombination aus Tris(2-ethylhexylsalicylato)vinylsilan und/oder Tris(2-ethylhexylsalicylato)methylsilan als Härter und 2,2-Dimethoxy-1-(n-butyl)aza-2-silacyclopentan (BDC) und/oder 2,2-Diethoxy-1-(trimethylsilyl)aza-2-silacyclopentan (TMS-DEC) als heterozyklisches Organosilan enthalten.

Ferner kann die erfindungsgemäße Zusammensetzung eine Kombination aus Vinyl-tris(ethyllactato)silan und/oder Methyl-tris(ethyllactato)silan als Härter und 2,2-Dimethoxy-1-(n-butyl)aza-2-silacyclopentan (BDC) und/oder 2,2-Diethoxy-1-(trimethylsilyl)aza-2-silacyclopentan (TMS-DEC) als heterozyklisches Organosilan enthalten.

Außerdem kann die erfindungsgemäße Zusammensetzung eine Kombination aus Vinyl-tris(ethyllactato)silan und/oder Methyl-tris(ethyllactato)silan als Härter und 2,2-Dimethoxy-1-(methyl)aza-2-silacyclopentan (MDC) und/oder 2,2-Diethoxy-1-(3-triethoxysilylpropyl)aza-2-silacyclopentan (TESPDC) heterozyklisches Organosilan enthalten.

Weiterhin kann die erfindungsgemäße Zusammensetzung eine Kombination aus Vinyl-tris(ethyllactato)silan und/oder Methyl-tris(ethyllactato)silan als Härter und 2,2-Dimethoxy-1-(phenyl)aza-2-silacyclopentan (Ph-DC) und/oder 2,2-Dimethoxy-1-(methyl)aza-2-silacyclopentan (MDC) als heterozyklisches Organosilan enthalten.

Die erfindungsgemäße Zusammensetzung kann auch eine Kombination aus Tris(ethylsalicylato)vinylsilan und/oder Tris(ethylsalicylato)propylsilan als Härter und 2,2-Diethoxy-1-(benzyl)aza-2-silacyclopentan (Bn-DEC) und/oder 2,2-Dimethoxy-1-(benzyl)aza-2-silacyclopentan (Bn-DC) als heterozyklisches Organosilan enthalten.

Außerdem kann die erfindungsgemäße Zusammensetzung eine Kombination aus Vinyl-tris(ethyllactato)silan und/oder Methyl-tris(ethyllactato)silan als Härter und 2,2-Diethoxy-1-(benzyl)aza-2-silacyclopentan (Bn-DEC) und/oder 2,2-Diethoxy-1-(3-triethoxysilylpropyl)aza-2-silacyclopentan (TESPDC) als heterozyklisches Organosilan enthalten.

Außerdem kann die erfindungsgemäße Zusammensetzung eine Kombination aus Vinyl-tris(ethyllactato)silan und/oder Methyl-tris(ethyllactato)silan als Härter und 2,2-Diethoxy-1-(phenyl)aza-2-silacyclopentan (Ph-DEC) und/oder 2,2-Diethoxy-1-(trimethylsilyl)aza-2-silacyclopentan (TMS-DEC) als heterozyklisches Organosilan enthalten.

Weiterhin kann die erfindungsgemäße Zusammensetzung eine Kombination aus Vinyl-tris(ethyllactato)silan und/oder Methyl-tris(ethyllactato)silan als Härter und 2,2-Dimethoxy-1-(trimethylsilyl)aza-2-silacyclopentan (TMS-DC) und/oder 2,2-Dimethoxy-1-(methyl)aza-2-silacyclopentan (MDC) als heterozyklisches Organosilan enthalten.

Es hat sich gezeigt, dass derartige Kombinationen von Härtern und Haftvermittlern positive Eigenschaften für Dichtstoffformulierungen aufweisen können. Zum einen wird die Reaktivität der Aminofunktion in den heterozyklischen Organosilanen derart vermindert, dass eine Amidierungsreaktion zwischen Silanen, insbesondere Silan-Vernetzern und den zyklischen Haftvermittlern erschwert wird oder bevorzugt vollständig unterbunden wird. Zum anderen werden die Vernetzer und Haftvermittler kaum oder bevorzugt nicht verbraucht. Die Organosilane, insbesondere die heterozyklischen Organosilane lassen sich mit unterschiedlichen Vernetzertypen, wie beispielsweise mit α-Hydroxycarbonsäurederivaten, α-Hydroxycarbonsäureamiden oder Oximderivaten kombinieren. Die Abgangsgruppen weisen zudem einen angenehmen Geruch auf, der bevorzugt durch die Zugabe spezieller Silylübertragungsreagenzien, wie zum Beispiel 2,2-Diethoxy-1-(trimethylsilyl)aza-2-silacyclopentan (TMS-DEC) oder 2,2-Diethoxy-1-(3-triethoxysilylpropyl)aza-2-silacyclopenta (TESPDC) weiter verbessert werden kann. Zudem eigenen sich die Organosilane, insbesondere die heterozyklischen Organosilane als Abfangreagenzien für Wasser, Alkohole oder Hydroxid-lonen. Somit wird die Langzeitstabilität während der Lagerung der Dichtstoffmassen verbessert. Außerdem wurde gefunden, dass solche Kombinationen in Dichtstoffen zu guten mechanischen Eigenschaften der Dichtstoffe führen. Zudem eignen sich diese Kombinationen für den Einsatz auf einer Vielzahl von Untergründen, zu denen auch angreifbare Untergründe wie Metalle, Marmor oder Mörtel zählen. Insbesondere zeigen die erfindungsgemäßen Dichtstoffe eine gute Haftung auf Kunststoff-Untergründen wie Polystyrol und Metzoplast.

Gemäß einer weiteren Ausführungsform der Erfindung umfasst eine erfindungsgemäße Zusammensetzung neben den oben beschriebenen Bestandteilen Härter und Haftvermittler oder erster Härter, zweiter Härter und Haftvermittler zumindest eine Organopolysiloxanverbindung vorzugsweise zwei, drei oder mehrere verschiedene Organopolysiloxanverbindungen. Eine in der Zusammensetzung enthaltene Organosiliconverbindung ist bevorzugt eine oligomere oder polymere Verbindung, die wie hierin definiert ist.

Im Sinne der Erfindung können die härtbaren Zusammensetzungen optional durch Zugabe von üblichen Additiven, wie Weichmacher, Füllstoffe, Farbmittel, Thixotropiermittel, Benetzungsmittel oder UV-Stabilisatoren, hinsichtlich ihrer Eigenschaften modifiziert werden.

In einer bevorzugten Ausführungsform werden Polyalkylsiloxane, besonders bevorzugt Polydimethylsiloxan als Weichmacher eingesetzt.

In einer weiteren bevorzugten Ausführungsform wird der härtbaren Zusammensetzung Kieselsäure als Füllstoff, besonders bevorzugt pyrogenes Siliziumdioxid auch als pyrogene Kieselsäure bezeichnet, zugegeben.

Aminoalkyltrialkoxysilane können bevorzugt als Thixotropiermittel eingesetzt werden. Das Aminopropyltriethoxysilan liefert hierbei Zusammensetzungen mit besonders vorteilhaften Eigenschaften und ist daher besonders bevorzugt.

Als Weichmacher können Verbindungen eingesetzt werden, die wie hierin definiert sind. In einer besonders bevorzugten Ausführungsform haben sich insbesondere bekannte Polydiorganosiloxane ohne funktionelle Endgruppen und/oder flüssige aliphatische oder aromatische Kohlenwasserstoffe als vorteilhaft erwiesen, vorzugsweise solche mit Molekulargewichten von etwa 50 bis etwa 5000, deren Flüchtigkeit gering ist und die mit Polysiloxanen hinreichend verträglich sind. Besonders bevorzugt sind Polydialkylsiloxane ohne funktionelle Endgruppen, ganz besonders bevorzugt ein Polydi-C₁₋₆-alkylsiloxan ohne funktionelle Endgruppen und höchst bevorzugt ein Polydimethylsiloxan ohne funktionelle Endgruppen.

Die erfindungsgemäßen Zusammensetzungen können in Gegenwart von Feuchtigkeit vernetzen. Dabei härten diese unter Ausbildung von Si-O-Si-Bindungen aus. Durch Zugabe eines geeigneten Katalysators kann die Aushärtung der Zusammensetzungen beschleunigt werden.

Daher enthält die Zusammensetzung bevorzugt weiterhin mindestens einen Katalysator. Es können metallorganische Katalysatoren verwendet werden, wie sie üblicherweise für kondensationsvernetzende Polysiloxane eingesetzt werden. Beispiele für Katalysatoren sind Zinn-Carboxylate, Titan-, Zirkonium- oder Aluminium-Verbindungen. Insbesondere sind dabei Verbindungen bevorzugt welche aus Titanasilsesquioxanen (Ti-POSS), DibutylZinndilaurat, Dibutyl-Zinndivaleriat, Dibutyl-Zinndiacetat, Dibutyl-Zinndineodecanoat, Dibutyl-Zinndiacetylacetonat, Dioctyl-Zinn-bis(2-ethylhexanoat), Dibutyl-Zinndimaleat, Zinn(II)octoat und Butylzinn-tris(2-ethylhexanoat) bestehen. Ganz besonders bevorzugte Katalysatoren sind (iBu)₇Si₇O₁₂TiOEt, (C₈H₁₇)₇Si₇O₁₂TiOEt, Dibutylzinndilaurat, Dibutylzinndiacetat und/oder Zinn(II)octoat.

Es wurde gefunden, dass die Zusammensetzung unter Feuchtigkeitsausschluß über Zeitspannen von mehr als 9 Monaten und bis zu mehr als 12 Monaten aufbewahrt werden kann und unter dem Einfluss von Wasser oder Luftfeuchtigkeit bei Raumtemperatur vernetzt.

Die erfindungsgemäße Zusammensetzung kann 30 bis 70 Gew.-% des α, ω-Dihydroxydialkylorganopolysiloxans, 1 bis 10 Gew-% des Härters und 0,1 bis 10 Gew.% des Organosilans, insbesondere heterozyklischen Organosilans umfassen, jeweils bezogen auf das Gesamtgewicht der erfindungsgemäßen Zusammensetzung.

Die erfindungsgemäße Zusammensetzung enthält bevorzugt 30 bis 70 Gew.-% α, ω-Dihydroxydialkylorganopolysiloxan, 1 bis 10 Gew.-% Härter, 0,1 bis 10 Gew.-% Organosilan, insbesondere heterozyklisches Organosilan, 20 bis 50 Gew.-% Weichmacher, 1 bis 20 Gew.-% Füllstoff und 0,01 bis 1 Gew.-% Katalysator, jeweils bezogen auf das Gesamtgewicht der erfindungsgemäßen Zusammensetzung.

Weiterhin kann die erfindungsgemäße Zusammensetzung 40 bis 60 Gew.-% α, ω-Dihydroxydialkylorganopolysiloxan, 3 bis 7 Gew.-% des Härters, 0,5 bis 2,5 Gew.-% Organosilan, insbesondere heterozyklisches Organosilan, 25 bis 40 Gew.-% Weichmacher, 5 bis 15 Gew.-% Füllstoff und 0,05 bis 0,5 Gew.-% Katalysator. umfassen, jeweils bezogen auf das Gesamtgewicht der erfindungsgemäßen Zusammensetzung.

Ebenfalls kann das Organosilan, insbesondere heterozyklische Organosilan in einer bevorzugten Ausführungsform als Wasserfänger, Alkoholfänger und/oder Hydroxid-lonenfänger verwendet werden. Die Organosilane, insbesondere heterozyklischen Organosilane können so, insbesondere vor Austragen positive Auswirkungen auf die Lagerstabilität der Zusammensetzungen haben.

Nach Austragen der erfindungsgemäßen Zusammensetzungen kann das Organosilan, insbesondere heterozyklische Organosilan mit der vorhandenen Luftfeuchtigkeit und/oder Wasser reagieren. Bevorzugt werden nach Alkoholyse und/oder Hydrolyse der Organosilane, insbesondere heterozyklischen Organosilane Verbindungen gebildet, die als Haftvermittler wirken können.

Demnach wird in einer besonders bevorzugten Ausführungsform der Erfindung das Reaktionsprodukt von mindestens einem Organosilan, insbesondere heterozyklischen Organosilan mit Wasser, Hydroxid-Ionen, Alkoholen oder Mischungen davon, als Haftvermittler verwendet.

Die erfindungsgemäßen Zusammensetzungen eignen sich insbesondere für die Verwendung zur Herstellung einer Silikonkautschukmasse.

Die Zusammensetzung wird bevorzugt im Bauwesen als Dichtungsmittel oder als Klebstoff, Vergussmasse oder Beschichtungsmittel verwendet. Insbesondere wird sie für Fugen im Hoch- und Tiefbau, Glas- und Fensterbau und im Sanitärbereich eingesetzt. Weitere Verwendungen gibt es im Maschinenbau, z.B. in der Automobilindustrie (bevorzugt), der Elektroindustrie, der Textilindustrie oder beim Industrieanlagenbau.

Im Folgenden wird die Erfindung an konkreten, nicht limitierenden Beispielen veranschaulicht.

### Beispiele:

### Haftvermittler-Synthese

Einige heterozyklische Organosilane sind kommerziell erhältliche Verbindungen wie N-n-butyl-aza-2,2-Dimethoxysilacyclopentan ((BDC), CAS-Nr. 618914-44-6), 2,2-Diethoxy-1-(3-triethoxysilylpropyl)aza-2-silacyclopentan ((TESPDC), CAS-Nr. 1184179-50-7) oder 2,2-Diethoxy-1-(trimethylsilyl)aza-2-silacyclopentan ((TMS)DEC), CAS-Nr. 21297-72-3). Bevorzugt werden die heterozyklischen Organosilane allerdings aus den nichtzyklischen Vorläufermolekülen synthetisch hergestellt. Die Synthese ist grundsätzlich bereits aus dem Stand der Technik bekannt und wird am Beispiel der Herstellung eines sila-azacyclopentans (BDC) exemplarisch veranschaulicht

### Beispiel 1

### Synthese von (BDC)

In einem 500 mL-Dreihalskolben mit Flügelrührer und Rückflusskühler werden unter Stickstoffatmosphäre 100.40 g (105.70 mL, 0.43 mol) Butylaminopropyltrimethoxysilan (BAPTMS) mit 2 g Ammoniumsulfat (1.13 mL, 0.015 mol) vorgelegt und unter Rühren langsam zum Sieden erhitzt (100 °C) und 8 h bei dieser Temperatur gehalten. Entfernen der flüchtigen Reaktionskomponenten bei 100 °C und 25 mbar liefert 52.5 g (0.26 mol, 60%) des Produkst N-n-butyl-aza-2,2-Dimethoxysilacyclopentan (BDC) als blassgelbe Flüssigkeit.

### Dichtstoffformulierungen

Es wurden weitere Dichtstoffformulierungen hergestellt und getestet.

Im Falle der nachfolgend beschriebenen Beispiele wurden sämtliche Parameter anhand der unten beschriebenen Prüfverfahren bestimmt. Alle nachfolgend beschriebenen Dichtstoffe waren transparent und farblos und wiesen einen angenehmen Geruch sowie eine ordnungsgemäße Stand- und Kerbfestigkeit nach 24h auf. Ferner haben die folgenden Dichtstoffe alle drei Prüfkörper gemäß der DIN EN ISO 8340 Klimatisierungsverfahren A auf Glas bei einer Dehnung um 100% der Anfangslänge, wobei die Dehnung 24h aufrechterhalten wurde, bestanden.

Die Produkteigenschaften Hautbildungszeit, Klebfreizeit, Durchhärtung und Reißdehnung der Silikonkautschukmischungen (Dichtstoffformulierungen) wurden nach Ausbringung der Dichtstoffe anhand der unten beschriebenen Prüfverfahren bestimmt. So weit nicht anders angegeben wurden die Messungen bei 23°C und 50% Luftfeuchtigkeit durchgeführt. Die Hautbildungszeit gibt dabei die Zeit an, zu der nach Ausbringung des Dichtstoffs an der Oberfläche eines Probenstranges eine vollständige Schicht aus verfestigtem Material (Haut) beobachtet wurde. Die Klebfreizeit gibt die Zeit an, zu der die Oberfläche eines Probenstranges keine Klebrigkeit mehr aufweist. Zur Bestimmung der vollständigen Aushärtung wird der Dichtstoff mit 9 mm Höhe auf eine Glasplatte aufgetragen und die Zeitdauer der Durchhärtung bis zur Glasplatte gemessen. Die Reißdehnung wurde gemäß DIN EN ISO 8339:2005-09 bestimmt.

### Beispiel 2

### Lactatvernetzergemisch mit 2,2-Dimethoxy-1-(n-butyl)aza-2-silacyclopentan (BDC)

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,9 |
| 3 | Vernetzer 1: Vinyl-tris(ethyllactato)silan | 2,5 |
| 4 | Vernetzer 2: Methyl-tris(ethyllactato)silan | 2,5 |
| 5 | Aminopropyltriethoxysilan (AMEO) | 0,2 |
| 6 | Pyrogene Kieselsäure, unbehandelt BET-Oberfläche 130-150 m²/g | 8,5 |
| 7 | Katalysator 1:1 (w/w) Mischung aus Dialkylzinoxid und Tetraalkoxysilan | 0,1 |
| 8 | Haftvermittler: 2,2-Dimethoxy-1-(n-butyl)aza-2-silacyclopentan (BDC) | 1,2 |

α,ω-Dihydroxy-dimethyl-polysiloxan 80.000 cSt, PDMS 100 cSt, Vinyl-tris(ethyllactato)silan und Methyl-tris(ethyllactato)silan wurden unter Vakuum gemischt. Anschließend wurde AMEO als Thixotropiermittel eingemischt. Danach wurde die Kieselsäure eindispergiert und solange unter Vakuum gerührt, bis die Masse glatt war. Abschließend wurden der Katalysator als 1:1 (w/w) Mischung aus Dialkylzinoxid und Tetraalkoxysilan und der Haftvermittler 2,2-Dimethoxy-1-(n-butyl)aza-2-silacyclopentan (BDC) unter Vakuum eingemischt.

Das Produkt war transparent und farblos. Es zeichnete sich durch eine Hautbildungszeit von 6 Minuten und einer Klebfreizeit von 100 Minuten aus. Die Zusammensetzung hatte auf allen getesteten Materialien eine gute Haftung, d.h. Glas, Aluminium, PVC, Blech, Stahl, Beton, Holz, Holz lackiert, Holz lasiert, Polyamid, Polystyrol, Metzoplast und AI/Mg-Legierung und wies einen angenehmen Geruch auf. Die determinierte Shore A-Härte betrug 27. Auch nach 6 Wochen Lagerung bei 50°C war der Dichtstoff nach Durchhärtung stabil (Shore A:18) und wies lediglich eine leicht gelbliche Färbung auf, wobei der resultierende Dichtstoff nach Austragen an Licht wieder farblos war. Die Extrusion bei Verwendung einer Düse mit 2 mm Durchmesser bei 5 bar und 30 Sekunden betrug 24,0 g. Weiterhin wies sich der Dichtstoff durch hervorragende Eigenschaften aus:

| **Eigenschaft** | **Dichtstoff** |
|---|---|
| Frühbelastbarkeit | 105 min |
| Durchhärtung auf Glas (9 mm) | 4 d |
| DIN EN ISO 8339 | 0,26 |
| Dehnspannungswert bei 100% Dehnung (N/mm²) | |
| DIN EN ISO 8339 | 0,42 |
| Sekantenmodul bei Reißdehnung (N/mm²) | |
| DIN EN ISO 8339 | 285% |
| Reißdehnung | |
| DIN EN ISO 7389 | 93% |
| Mittleres Rückstellvermögen | |
| DIN 53504 | 0,98 |
| Reißfestigkeit (N/mm²) | |
| DIN 53504 | 1050% |
| Reißdehnung | |

### Beispiel 3

### Lactatvernetzergemisch mit 2,2-Diethoxy-1-(trimethylsilyl)aza-2-silacyclopentan (TMS-DEC)

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,4 |
| 3 | Vernetzer 1: Vinyl-tris(ethyllactato)silan | 0,8 |
| 4 | Vernetzer 2: Methyl-tris(ethyllactato)silan | 3,2 |
| 5 | Aminopropyltriethoxysilan (AMEO) | 0,2 |
| 6 | Pyrogene Kieselsäure, hydrophobiert BET-Oberfläche 130-150 m²/g | 10,0 |
| 7 | Katalysator 1:1 (w/w) Mischung aus Dialkylzinoxid und Tetraalkoxysilan | 0,1 |
| 8 | Haftvermittler: 2,2-Diethoxy-1-(trimethylsilyl)aza-2-silacyclopentan (TMS-DEC) | 1,2 |

Polymer 80.000 cSt, PDMS 100 cSt und das Vernetzergemisch aus Vinyl-tris(ethyllactato)silan und Methyl-tris(ethyllactato)silan wurden unter Vakuum gemischt. Anschließend wurde das Thixotropiermittel AMEO unter Vakuum zugegeben. Danach wurde die Kieselsäure eindispergiert und solange unter Vakuum gerührt, bis die Masse glatt war. Anschließend wurde der Katalysator als 1:1 (w/w) Mischung aus Dialkylzinoxid und Tetraalkoxysilan und der Haftvermittler 2,2-Diethoxy-1-(trimethylsilyl)aza-2-silacyclopentan (TMS-DEC) unter Vakuum eingemischt.

Das Produkt war transparent und farblos. Es zeichnete sich durch eine Hautbildungszeit von 17 Minuten und einer Klebfreizeit von 33 Minuten aus. Der resultierende Dichtstoff hatte auf allen getesteten Materialien eine gute Haftung, d.h. Glas, Aluminium, PVC, Blech, Stahl, Beton, Holz, Holz lackiert, Holz lasiert, Polyamid, AI/Mg-Legierung, Polystyrol und Metzoplast und wies einen angenehmen Geruch auf.

Die determinierte Shore A-Härte betrug 22. Auch nach 8 Wochen Lagerung bei 60°C war der Dichtstoff stabil (Shore A: 16) und wies lediglich eine leicht gelbliche Färbung auf. Die Extrusion bei Verwendung einer Düse mit 2 mm Durchmesser bei 5 bar und 30 Sekunden betrug 31,0 g, wobei der Dichtstoff nach Ausbringung an Licht wieder transparent und farblos war. Der Dichtstoff zeichnete sich zusätzlich durch folgende hervorragende Eigenschaften aus:

| **Eigenschaft** | **Dichtstoff** |
|---|---|
| Frühbelastbarkeit | 105 min |
| Durchhärtung auf Glas (9 mm) | 6 d |
| DIN EN ISO 8339 | 0,24 |
| Dehnspannungswert bei 100% Dehnung (N/mm²) | |
| DIN EN ISO 8339 | 0,45 |
| Sekantenmodul bei Reißdehnung (N/mm²) | |
| DIN EN ISO 8339 | 470% |
| Reißdehnung | |
| DIN EN ISO 7389 | 93% |
| Mittleres Rückstellvermögen | |
| DIN 53504 | 0,61 |
| Reißfestigkeit (N/mm²) | |
| DIN 53504 | 830% |
| Reißdehnung | |

### Vergleich der Lagerstabilität bei Einsatz von erfindungsgemäßen Haftvermittlern (Beispiel 4 und 5) gegenüber herkömmlichen Haftvermittlern (Vergleichsbeispiel):

Es werden im Fall der Dichtstoffrezepturen aus den folgenden Beispielen 4 und 5 und dem Vergleichsbeispiel jeweils Silikonkautschukmassen mit folgender Formulierung hergestellt:

| | |
|---|---|
| 521 g | alpha,omega-dihydroxyl-terminiertes Polydimethylsiloxan mit Viskosität 80.000 cSt |
| 324 g | Polydimethylsiloxan mit Viskosität 100 cSt |
| 8 g | Vernetzer 1 : Vinyl-tris(ethyllactato)silan |
| 32 g | Vernetzer 2 : Methyl-tris(ethyllactato)silan |
| 2 g | Aminoalkyltrialkoxysilan (AMEO) |
| 100 g | Pyrogene Kieselsäure |
| 1 g | Katalysator 1:1 (w/w) Mischung aus Dialkylzinoxid und Tetraalkoxysilan |

### Beispiel 4

Folgender Haftvermittler wurde der Dichtstoffrezeptur zugesetzt:

| | |
|---|---|
| 12 g | Haftvermittler: 2,2-Dimethoxy-1-(methyl)aza-2-silacyclopentan (MDC) |

α,ω-Dihydroxy-dimethyl-polysiloxan 80.000 cSt, PDMS 100 cSt, Vinyl-tris(ethyllactato)silan und Methyl-tris(ethyllactato)silan wurden unter Vakuum gemischt. Danach wurde die Kieselsäure eindispergiert und solange unter Vakuum gerührt, bis die Masse glatt war. Anschließend wird AMEO als Thixotropiermittel eingemischt. Danach wurde die Kieselsäure eindispergiert und solange unter Vakuum gerührt, bis die Masse glatt war. Zum Schluss werden der Katalysator als 1:1 (w/w) Mischung aus Dialkylzinoxid und Tetraalkoxysilan und der Haftvermittler 2,2-Dimethoxy-1-(methyl)aza-2-silacyclopentan (MDC) unter Vakuum eingemischt.

Der resultierende Dichtstoff war transparent und farblos und wies eine Hautbildungszeit von 5 Minuten, eine Klebfreizeit von 9 Minuten und eine Durchhärtung auf Glas (Dichtstoff 9 mm dick auf einer Glasplatte aufgetragen) von 6 Tagen auf. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid, AI/Mg-Legierung, Polystyrol und Metzoplast und wies einen angenehmen Geruch auf. Die Bestimmung der Reißfestigkeit nach DIN 53504 betrug 1,1 N/mm² und die Reißdehnung gemäß DIN 53504 wurde zu 1100% bestimmt. Die determinierte Shore A-Härte betrug 27. Auch nach Lagerung des Dichtstoffes bei 50°C für 8 Wochen war der Dichtstoff stabil (Shore A: 17) und zeigte eine nur geringfügige leicht gelbliche Verfärbung. Nach Ausbringen wird der Dichtstoff an Licht wieder farblos.

### Beispiel 5

### Haftvermittler Ph-DEC

| | |
|---|---|
| 12 g | Haftvermittler: 2,2-Diethoxy-1-(phenyl)aza-2-silacyclopentan (Ph-DEC) |

α,ω-Dihydroxy-dimethyl-polysiloxan 80.000 cSt, PDMS 100 cSt, Vinyl-tris(ethyllactato)silan und Methyl-tris(ethyllactato)silan wurden unter Vakuum gemischt. Danach wurde die Kieselsäure eindispergiert und solange unter Vakuum gerührt, bis die Masse glatt war. Anschließend wird AMEO als Thixotropiermittel eingemischt. Danach wurde die Kieselsäure eindispergiert und solange unter Vakuum gerührt, bis die Masse glatt war. Zum Schluss werden der Katalysator als 1:1 (w/w) Mischung aus Dialkylzinoxid und Tetraalkoxysilan und der Haftvermittler 2,2-Diethoxy-1-(phenyl)aza-2-silacyclopentan (Ph-DEC) unter Vakuum eingemischt.

Der resultierende Dichtstoff war transparent und farblos und wies eine Hautbildungszeit von 70 Minuten, eine Klebfreizeit von 24 h und eine Durchhärtung auf Glas (Dichtstoff 9 mm dick auf einer Glasplatte aufgetragen) von 7 Tagen auf. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid, Al/Mg-Legierung, Polystyrol und Metzoplast und wies einen angenehmen Geruch auf. Die determinierte Shore A-Härte betrug 25. Nach Lagerung des Dichtstoffes bei 50°C für 8 Wochen war der Dichtstoff stabil (Shore A: 16) und zeigte eine nur geringfügige leicht gelbliche Verfärbung.

### Vergleichsbeispiel (Stand der Technik; angelehnt an EP2030976 A1, Beispiel 7)

### Haftvermittler aus Beispiel 7

| | |
|---|---|
| 12 g | Haftvermittler: Aminoalkyltrialkoxysilan [AMEO] |

Der resultierende Dichtstoff hat nach Ausbringung an Luft ein transparentes Aussehen und wies eine Hautbildungszeit von 5 Minuten, eine Klebfreizeit von 32 Minuten auf. Der Dichtstoff zeigte eine schlechte Haftung auf Glas, Aluminium, PVC, Blech, Stahl, Holz, Holz lackiert, Holz lasiert, Polyamid, AI/Mg-Legierung, Beton, Polystyrol und Metzoplast. Zudem erfolgte keine Durchhärtung auf Glas (9mm) und die Lagerstabilität bei 50 °C war bereits nach 4 Tagen nicht mehr gegeben.

### Beispiel 6

### Lactatvernetzergemisch mit 2,2-Dimethoxy-1-(benzyl)aza-2-silacyclopentan (Bn-DC)

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,4 |
| 3 | Vernetzer 1: Vinyl-tris(ethyllactato)silan | 0,8 |
| 4 | Vernetzer 2: Methyl-tris(ethyllactato)silan | 3,2 |
| 5 | Aminopropyltriethoxysilan (AMEO) | 0,2 |
| 6 | Pyrogene Kieselsäure, hydrophobiert BET-Oberfläche 130-150 m²/g | 10,0 |
| 7 | Katalysator 1:1 (w/w) Mischung aus Dialkylzinoxid und Tetraalkoxysilan | 0,1 |
| 8 | Haftvermittler: 2,2-Dimethoxy-1-(benzyl)aza-2-silacyclopentan (Bn-DC) | 1,2 |

Polymer 80.000 cSt, PDMS 100 cSt und das Vernetzergemisch aus Vinyl-tris(ethyllactato)silan und Methyl-tris(ethyllactato)silan wurden unter Vakuum gemischt. Anschließend wurde das Thixotropiermittel AMEO unter Vakuum eingemischt. Danach wurde die Kieselsäure eindispergiert und solange unter Vakuum gerührt, bis die Masse glatt war. Anschließend wurde der Katalysator als 1:1 (w/w) Mischung aus Dialkylzinoxid und Tetraalkoxysilan und der Haftvermittler 2,2-Dimethoxy-1-(benzyl)aza-2-silacyclopentan (Bn-DC) unter Vakuum eingemischt.

Die resultierende Zusammensetzung war nach Aushärtung transparent und farblos. Sie zeichnete sich durch eine Hautbildungszeit von 18 Minuten und eine Klebfreizeit von 30 Minuten aus. Der resultierende Dichtstoff hatte auf allen getesteten Materialien eine gute Haftung, d.h. Glas, Aluminium, PVC, Blech, Stahl, Beton, Holz, Holz lackiert, Holz lasiert, Polyamid, AI/Mg-Legierung, Polystyrol und Metzoplast und wies einen angenehmen Geruch auf.

Die Shore A-Härte betrug 23. Auch nach 8 Wochen Lagerung bei 50°C war die Zusammensetzung nach Durchhärtung stabil (Shore A:17) und wies lediglich eine leicht gelbliche Färbung auf. Die Extrusion bei Verwendung einer Düse mit 2 mm Durchmesser bei 5 bar und 30 Sekunden betrug 30,0 g, wobei der Dichtstoff nach Ausbringung an Licht wieder transparent und farblos war. Der Dichtstoff zeichnete sich zusätzlich durch folgende hervorragende Eigenschaften aus:

| **Eigenschaft** | **Dichtstoff** |
|---|---|
| Frühbelastbarkeit | 105 min |
| Durchhärtung auf Glas (9 mm) | 6 d |
| DIN EN ISO 8339 | 0,29 |
| Dehnspannungswert bei 100% Dehnung (N/mm²) | |
| DIN EN ISO 8339 | 0,53 |
| Sekantenmodul bei | |
| Reißdehnung (N/mm²) | |
| DIN EN ISO 8339 | 335% |
| Reißdehnung | |
| DIN EN ISO 7389 | 93% |
| Mittleres Rückstellvermögen | |

### Beispiel 7

### Lactatvernetzergemisch mit 2,2-Dimethoxy-1-(phenyl)aza-2-silacyclopentan (Ph-DC)

Es wurde eine Siliconkautschukmischung gemäß der folgenden Zusammensetzung durch Mischen der Komponenten analog der bereits beschriebenen Beispielformulierungen unter Vakuum hergestellt:

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,4 |
| 3 | Vernetzer 1: Vinyl-tris(ethyllactato)silan | 0,8 |
| 4 | Vernetzer 2: Methyl-tris(ethyllactato)silan | 3,2 |
| 5 | Aminopropyltriethoxysilan (AMEO) | 0,2 |
| 6 | Pyrogene Kieselsäure, hydrophobiert BET-Oberfläche 130-150 m²/g | 10,0 |
| 7 | Katalysator 1:1 (w/w) Mischung aus Dialkylzinoxid und Tetraalkoxysilan | 0,1 |
| 8 | Haftvermittler: 2,2-Dimethoxy-1-(phenyl)aza-2-silacyclopentan (Ph-DC) | 1,2 |

Der resultierende Dichtstoff war transparent und farblos und wies eine Hautbildungszeit von 120 Minuten und eine Klebfreizeit von 24 h auf. Der resultierende Dichtstoff hatte auf allen getesteten Materialien eine gute Haftung, d.h. Glas, Aluminium, PVC, Blech, Stahl, Beton, Holz, Holz lackiert, Holz lasiert, Polyamid, Al/Mg-Legierung, Polystyrol und Metzoplast und wies einen angenehmen Geruch auf.

Die determinierte Shore A-Härte betrug 22. Auch nach 8 Wochen Lagerung bei 50°C war die Zusammensetzung nach Durchhärtung stabil (Shore A:16) und wies lediglich eine leicht gelbliche Färbung auf, die bei Ausbringung an Licht wieder ins Farblose wechselte. Die Extrusion bei Verwendung einer Düse mit 2 mm Durchmesser bei 5 bar und 30 Sekunden betrug 24,0 g. Der Dichtstoff zeichnete sich durch weitere hervorragende Eigenschaften aus:

| **Eigenschaft** | **Dichtstoff** |
|---|---|
| Frühbelastbarkeit | 280 min |
| Durchhärtung auf Glas (9 mm) | 7 d |
| DIN EN ISO 8339 | 0,29 |
| Dehnspannungswert bei 100% Dehnung (N/mm²) | |
| DIN EN ISO 8339 | 0,51 |
| Sekantenmodul bei Reißdehnung (N/mm²) | |
| DIN EN ISO 8339 | 320% |
| Reißdehnung | |
| DIN EN ISO 7389 | 93% |
| Mittleres Rückstellvermögen | |

### Beispiel 8

### Lactatvernetzergemisch mit 2,2-Diethoxy-1 -(3-triethoxysilylpropyl)aza-2-silacyclopentan (TESPDC)

Es wurde eine Siliconkautschukmischung gemäß der folgenden Zusammensetzung durch Mischen der Komponenten analog der bereits beschriebenen Beispiele unter Vakuum hergestellt:

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,4 |
| 3 | Vernetzer 1: Vinyl-tris(ethyllactato)silan | 0,8 |
| 4 | Vernetzer 2: Methyl-tris(ethyllactato)silan | 3,2 |
| 5 | Aminopropyltriethoxysilan (AMEO) | 0,2 |
| 6 | Pyrogene Kieselsäure, hydrophobiert BET-Oberfläche 130-150 m²/g | 10,0 |
| 7 | Katalysator 1:1 (w/w) Mischung aus Dialkylzinoxid und Tetraalkoxysilan | 0,1 |
| 8 | Haftvermittler: 2,2-Diethoxy-1-(3-triethoxysilylpropyl)aza-2-silacyclopentan (TESPDC) | 1,2 |

Der resultierende Dichtstoff war transparent und farblos und zeichnete sich durch eine Hautbildungszeit von 6 Minuten sowie eine Klebfreizeit von 18 Minuten aus. Die Zusammensetzungen hatten nach Aushärtung auf allen getesteten Materialien eine gute Haftung, d.h. Glas, Aluminium, PVC, Blech, Stahl, Beton, Holz, Holz lackiert, Holz lasiert, Polyamid, AI/Mg-Legierung, Polystyrol und Metzoplast und wiesen einen angenehmen Geruch auf.

Die determinierte Shore A-Härte betrug 29. Auch nach 8 Wochen Lagerung bei 50°C war der Dichtstoff stabil (Shore A:17) und wies lediglich eine leicht gelbliche Färbung auf, wobei der Dichtstoff bei Ausbringung an Licht wieder farblos wurde. Die Extrusion bei Verwendung einer Düse mit 2 mm Durchmesser bei 5 bar und 30 Sekunden betrug 34,0 g. Weiterhin wies der Dichtstoff zudem die folgenden hervorragenden Eigenschaften auf:

| **Eigenschaft** | **Dichtstoff** |
|---|---|
| Frühbelastbarkeit | 105 min |
| Durchhärtung auf Glas (9 mm) | 7 d |
| DIN EN ISO 8339 | 0,33 |
| Dehnspannungswert bei 100% Dehnung (N/mm²) | |
| DIN EN ISO 8339 | 0,45 |
| Sekantenmodul bei Reißdehnung (N/mm²) | |
| DIN EN ISO 8339 | 270% |
| Reißdehnung | |
| DIN EN ISO 7389 | 93% |
| Mittleres Rückstellvermögen | |

### Beispiel 9

### Lactatvernetzergemisch mit 2,2-Diethoxy-1-(benzyl)aza-2-silacyclopentan (Bn-DEC)

Es wurde eine Siliconkautschukmischung gemäß der folgenden Zusammensetzung durch Mischen der Komponenten wie vorstehend beschrieben unter Vakuum hergestellt:

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,4 |
| 3 | Vernetzer 1: Vinyl-tris(ethyllactato)silan | 0,8 |
| 4 | Vernetzer 2: Methyl-tris(ethyllactato)silan | 3,2 |
| 5 | Aminopropyltriethoxysilan (AMEO) | 0,2 |
| 6 | Pyrogene Kieselsäure, hydrophobiert BET-Oberfläche 130-150 m²/g | 10,0 |
| 7 | Katalysator 1:1 (w/w) Mischung aus Dialkylzinoxid und Tetraalkoxysilan | 0,1 |
| 8 | Haftvermittler: 2,2-Diethoxy-1-(benzyl)aza-2-silacyclopentan (Bn-DEC) | 1,2 |

Das Produkt war transparent und farblos und wies eine Hautbildungszeit von 11 Minuten und eine Klebfreizeit von 21 Minuten auf. Es hatte auf allen getesteten Materialien eine gute Haftung, d.h. Glas, Aluminium, PVC, Blech, Stahl, Beton, Holz, Holz lackiert, Holz lasiert, Polyamid, AI/Mg-Legierung, Polystyrol und Metzoplast und wies einen angenehmen Geruch auf.

Die determinierte Shore A-Härte betrug 27. Auch nach 8 Wochen Lagerung bei 50°C war der Dichtstof stabil (Shore A:16) und wies lediglich eine leicht gelbliche Färbung auf, wobei der Dichtstoff bei Ausbringung an Licht wieder farblos wurde. Die Extrusion bei Verwendung einer Düse mit 2 mm Durchmesser bei 5 bar und 30 Sekunden betrug 30,0 g. Der Dichtstoff wies zudem eine Frühbelastbarkeit von 100 Minuten auf. Die Durchhärtung auf Glas wurde zu 7 Tagen bestimmt.

### Beispiel 10

### Lactatvernetzergemisch mit 2,2-Dimethoxy-1-(n-butyl)aza-2-silacyclopentan (BDC) und zusätzlicher Stabilisierung durch 1,3-Bis(trimethylsilyl)urea (BSU)

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 31,9 |
| 3 | Vernetzer 1: Vinyl-tris(ethyllactato)silan | 4,0 |
| 4 | Vernetzer 2: Methyl-tris(ethyllactato)silan | 1,0 |
| 5 | Stabilisator: 1,3 Bis(trimethylsilyl)urea (BSU-Paste) | 1,0 |
| 6 | Aminopropyltriethoxysilan (AMEO) | 0,2 |
| 7 | Pyrogene Kieselsäure, unbehandelt BET-Oberfläche 130-150 m²/g | 8,5 |
| 8 | Katalysator 1:1 (w/w) Mischung aus Dialkylzinoxid und Tetraalkoxysilan | 0,1 |
| 9 | Haftvermittler: 2,2-Dimethoxy-1-(n-butyl)aza-2-silacyclopentan (BDC) | 1,2 |

Polymer 80.000 cSt, PDMS 100 cSt werden unter Vakuum für 5 Minuten gemischt. Dann werden das Vernetzergemisch aus Vinyl-tris(ethyllactato)silan und Methyl-tris(ethyllactato)silan und die BSU-Paste unter Vakuum für 5 Minuten eingemischt. Anschließend wurde das Thixotropiermittel AMEO unter Vakuum zugegeben. Danach wurde die Kieselsäure eindispergiert und solange unter Vakuum gerührt, bis die Masse glatt war. Abschließend erfolgte die Zugabe des Katalysators als 1:1 (w/w) Mischung aus Dialkylzinoxid und Tetraalkoxysilan und des Haftvermittlers BDC unter Vakuum und die Mischung wurde im Anschluss für 20 Minuten gerührt.

Das Produkt war transparent und farblos und wies eine Hautbildungszeit von 9 Minuten und eine Klebfreizeit von 21 Minuten auf. Es hatte auf allen getesteten Materialien eine gute Haftung, d.h. Glas, Aluminium, PVC, Blech, Stahl, Beton, Holz, Holz lackiert, Holz lasiert, Polyamid, Al/Mg-Legierung, Polystyrol und Metzoplast und wies einen angenehmen Geruch auf.

### Beispiel 11

### Oximvernetzergemisch mit 2,2-Dimethoxy-1-(trimethylsilyl)aza-2-silacyclopentan (TMS-DC)

| | **Komponente** | **Gew.-%** |
|---|---|---|
| 1 | α,ω-Dihydroxy-dimethyl-polysiloxan 80.000 cSt | 52,0 |
| 2 | Polydimethylsiloxan (PDMS) 100 cSt | 30,2 |
| 3 | Vernetzer 1: Vinyl-tris(2-pentanonoximo)silan | 1,3 |
| 4 | Vernetzer 2: Methyl-tris(2-pentanonoximo)silan | 2,9 |
| 5 | Pyrogene Kieselsäure, unbehandelt BET-Oberfläche 130-150 m²/g | 10,3 |
| 6 | Katalysator 1:1 (w/w) Mischung aus Dialkylzinoxid und Tetraalkoxysilan | 0,12 |
| 7 | Haftvermittler 1: 2,2-Dimethoxy-1-(trimethylsilyl)aza-2-silacyclopentan (TMS-DC) | 1,2 |
| 8 | Haftvermittler 2 auf Basis von N-(2-Aminoethyl)-3-aminopropyltrimethoxysilan (DAMO) | 0,5 |

Polymer 80.000 cSt, PDMS 100 cSt und das Vernetzergemisch aus Oxim und Oxim wurden unter Vakuum gemischt. Danach wurde die Kieselsäure eindispergiert und solange unter Vakuum gerührt, bis die Masse glatt war. Anschließend wurde der Katalysator als 1:1 (w/w) Mischung aus Dialkylzinoxid und Tetraalkoxysilan zusammen mit dem Haftvermittler 1 (2,2-Dimethoxy-1-(trimethylsilyl)aza-2-silacyclopentan (TMS-DC)) und Haftvermittler 2 (auf Basis von N-(2-Aminoethyl)-3-aminopropyltrimethoxysilan (DAMO)) unter Vakuum eingemischt.

Das Produkt war transparent und farblos. Es zeichnete sich durch eine Hautbildungszeit von 6 Minuten und einer Klebfreizeit von 15 Minuten aus. Der resultierende Dichtstoff hatte auf allen getesteten Materialien eine gute Haftung, d.h. Glas, Aluminium, PVC, Blech, Stahl, Beton, Holz, Holz lackiert, Holz lasiert, Polyamid, Al/Mg-Legierung und wies einen mäßig angenehmen Geruch auf.

Die determinierte Shore A-Härte betrug 22. Auch nach 4 Wochen Lagerung bei 60°C war der Dichtstoff stabil (Shore A:21) und farblos. Die Extrusion bei Verwendung einer Düse mit 2 mm Durchmesser bei 5 bar und 30 Sekunden betrug 24,0 g. Der Dichtstoff war zusätzlich nach 60 min frühbelastbar und zeigte eine Durchhärtung auf Glas von 4 Tagen.

### Allgemeine Durchführung der Prüfverfahren:

### 1. Bestimmung der Klebfreizeit von Silikon-Dichtstoffen

Für die Bestimmung der Klebfreizeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Die aktuelle Uhrzeit wird abgelesen. In entsprechenden Zeitabständen wird mit einem sauberen Finger durch leichtes Berühren auf der Silikonoberfläche die Klebfreizeit des zu bestimmenden Dichtstoffes ermittelt. Ist der Dichtstoff klebfrei so wird die aktuelle Uhrzeit erneut abgelesen.

### 2. Bestimmung der Extrusion von Silikon-Dichtstoffen

Eine fertig abgefüllte und verschlossene Kartusche (Standzeit des Dichtstoffes nach Compoundierung mindestens 24 Stunden) wird in eine Druckluftpistole für Silikon-Kartuschen eingelegt und eine geeignete Kartuschenspitze aufgeschraubt. Die Druckluftpistole wird an die Pressluftversorgung angeschlossen und an dem Druckmanometer wird ein Druck von 5 bar eingestellt. Aus der Silikon-Kartusche wirdzunächst eine kleine Menge an Silikon auf ein Wischpapier gespritzt, so dass die Kartuschenspitze komplett mit Silikon gefüllt ist. Anschließend wird ein Aluschälchen auf die Oberschalenwaage gelegt und tariert. Nun wird exakt 30 Sekunden lang Silikon auf das Schälchen gespritzt und das Gewicht abschließend auf der Oberschalenwaage abgelesen.

### 3. Bestimmung der Standfestigkeit von Silikon-Dichtstoffen

Für die Bestimmung der Standfestigkeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einem Karton kreisförmig eine Schneckenform aufgespritzt (Durchmesser ca. 3 cm). Der Karton mit der Silikonschnecke wird nun senkrecht hingestellt und die aktuelle Uhrzeit wird abgelesen.

Nach 30 Minuten wird beobachtet, ob die Silikonschnecke die ursprüngliche Form hat oder ob die Schnecke nach unten geflossen ist. Hat sich die Schneckenform nicht verändert, so ist der Silikon-Dichtstoff standfest.

### 4. Bestimmung der Durchhärtung von Silikon-Dichtstoffen

Für die Bestimmung der Durchhärtung ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. In entsprechenden Zeitabständen (Tagen) wird mit einem Messer vom Silikon vorsichtig ein kleines Querstück abgeschnitten und die Durchhärtung des Dichtstoffes beurteilt. Ist der innere Teil des Dichtstoffkörpers noch klebrig und gelartig, so ist der Dichtstoff noch nicht durchgehärtet und die Bestimmung wird wiederholt. Ist der Dichtstoff vollständig durchgehärtet, so wird die Durchhärtungsdauer in Tagen notiert. Ist der Dichtstoff nach 7 Tagen nach Ausbringung immer noch klebrig, so ist das Kriterium Durchhärtung als nicht in Ordnung zu beurteilen.

### 5. Bestimmung der Haftung von Silikon-Dichtstoffen

Für die Bestimmung der Haftung ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einem entsprechenden gesäuberten Trägermaterial (z.B. Glas, Aluminium, Holz, Kunststoff, Beton, Naturstein, etc.) ein Silikonknopf aufgespritzt. Nach der kompletten Durchhärtung des Dichtstoffes (ca. 48 h) wird an dem Silikonknopf mit den Fingern gezogen, ob sich das Silikon wieder von dem Trägermaterial löst bzw. ob das Silikon eine innige Verbindung mit dem Trägermaterial gebildet hat. Lässt sich der Silikonknopf leicht, schwer oder überhaupt nicht vom Trägermaterial abziehen, so wird die Hafteigenschaft als schlecht, mittel oder gut beurteilt.

### 6. Bestimmung des Geruchs von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich seines Geruches beurteilt.

### 7. Bestimmung des Aspekts von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich Erscheinung, Farbe und Glätte visuell beurteilt.

### 8. Bestimmung der Hautbildungszeit von Silikon-Dichtstoffen

Für die Bestimmung der Hautbildungszeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. In entsprechenden Zeitabständen wird mit einem sauberen Finger durch leichten Druck auf die Silikonoberfläche die Hautbildung des zu bestimmenden Dichtstoffes ermittelt. Bildet der Dichtstoff eine Haut an seiner Oberfläche so dass am Finger keine Silikonreste mehr zurück bleiben, wird die gemessene Zeit an der Stoppuhr abgelesen.

### 9. Zugversuch mit Schulterstab S1 nach DIN 53504

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen. Die Gussform wird mit Spülmittel benetzt, um Silikonanhaftungen am Metall zu verhindern. Eine fertig abgefüllte und verschlossene Kartusche wird in eine Pistole für Silikon-Kartuschen eingelegt. Die Spitze der Kartusche wird entfernt. Anschließend wird auf der Matrize für den Schulterstab S 1 das Silikon über die Länge und Höhe der ausgefrästen Gussform aufgespritzt und sofort mit einer Spachtel glatt gezogen. Nach mind. 24 Stdn. wird die Durchhärtung des Silikons durch Anheben des Prüfkörpers aus der Matrize geprüft. Es darf keine klebrige Oberfläche mehr vorhanden sein. Der Schulterstab muss optisch einwandfrei, ohne Luft- und Fremdeinschlüsse oder Risse sein. Der Prüfkörper wird nach dem Abziehen aus der Matrize mit der Versuchsnummer gekennzeichnet. Im Zugprüfgerät T 300 müssen die Zugklemmen für den Schulterstab S 1 ein-gesetzt sein. Der prüffähige Schulterstab wird zwischen der oberen und unteren Klemme so eingespannt, dass der Steg genau 26 mm Anfangsmesslänge anzeigt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar

### 10. Zugversuch mit H-Prüfkörper nach DIN 8339

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen.

Eine fertig abgefüllte und verschlossene Kartusche wird in eine Pistole für Silikon-Kartuschen eingelegt. Die Spitze der Kartusche wird entfernt. Anschließend wird auf der Matrize das Silikon über die Länge und Höhe der Gussform aufgespritzt und sofort mit einer Spachtel glatt gezogen. Danach wird der Prüfkörper 28 Tage bei Normbedingungen gelagert. Vor der Zugprüfung wird der Prüfkörper optisch überprüft. Der Prüfkörper darf keine Lufteinschlüsse oder Risse zeigen.

Im Zugprüfgerät MFC T 300 müssen die Zugklemmen für den H-Prüfkörper ein-gesetzt sein. Der Prüfkörper wird zwischen der oberen und unteren Klemme so eingespannt, dass der Abstand 12 mm beträgt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar.

### 11. Zugversuch mit H-Prüfkörper nach DIN 8340

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen. Eine fertig abgefüllte und verschlossene Kartusche wird in eine Pistole für Silikon-Kartuschen eingelegt. Die Spitze der Kartusche wird entfernt. Anschließend wird auf der Matrize das Silikon über die Länge und Höhe der Gussform aufgespritzt und sofort mit einer Spachtel glatt gezogen. Danach wird der Prüfkörper 28 Tage bei Normbedingungen gelagert. Vor der Zugprüfung wird der Prüfkörper optisch überprüft. Der Prüfkörper darf keine Lufteinschlüsse oder Risse zeigen.

Im Zugprüfgerät MFC T 300 müssen die Zugklemmen für den H-Prüfkörper ein-gesetzt sein. Der Prüfkörper wird zwischen der oberen und unteren Klemme so eingespannt, dass der Abstand 12 mm beträgt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar.

### 12. Bestimmung der Lagerstabilität von Silikon-Dichtstoffen

Eine fertig abgefüllte und verschlossene Kartusche wird in den beheizten Trockenschrank gegeben. Entsprechend dem Protokoll Prüfmethoden wird der Silikon-Dichtstoff bei einer entsprechenden Temperatur über einen gewissen Zeitraum von mehreren Wochen im beheizten Trockenschrank gelagert. Nach Ablauf der Lagerungszeit wird die Kartusche in eine Pistole für Silikon-Kartuschen eingelegt. Anschließend wird auf einem ausgelegten Fließtuch eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich PA-E0002 sowie PA-E0010 beurteilt.

### 13. Bestimmung der Frühbelastbarkeit von Silikon-Dichtstoffen

Für die Bestimmung der Frühbelastbarkeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Auf den Karton werden zunächst waagrechte Linien im Abstand von jeweils 3 cm aufgezeichnet und anschließend angeschnitten. Anschließend wird auf dem Karton eine entsprechende Silikonmenge aufgespritzt. Mit dem Spatel wird zügig über das Silikon gestrichen, so dass ein durchgehender Silikonstreifen entsteht. Die aktuelle Uhrzeit wird abgelesen. In gleichen Zeitabständen von 15 Minuten wird beginnend an der ersten Linie der Karton zu einem rechten Winkel geknickt und die Oberfläche des Silikons an der Knickstelle begutachtet. Ist an der Knickstelle das Silikon vollständig oder nur teilweise gerissen, so wird die Bestimmung an der nächsten 3 cm-Linie nach weiteren 15 Minuten wiederholt. Ist an der Knickstelle das Silikon elastisch und kein Riss feststellbar, so ist das Silikon frühbelastbar. Die aktuelle Uhrzeit wird erneut abgelesen.

### 14. Bestimmung der Shore-Härte von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Bei einem vollständig durchgehärtetem Dichtstoff (siehe PA-E0008) wird auf die Silikonoberfläche das Shore-Härte Bestimmungsgerät mit beiden Händen völlig plan aufgesetzt und der Maximalwert der Shore-Härte abgelesen. Die Messung wird mindestens 5-mal an verschiedenen Stellen auf der Silikon-Oberfläche wiederholt und ein Mittelwert aus den Einzelmessungen gebildet.

### Die Anmeldung beschreibt weiter folgendes:

### Ausführungsform 1:

Zusammensetzung enthaltend
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
   m eine ganze Zahl von 0 bis 2 ist,
   jeder R unabhängig voneinander ausgewählt ist aus der Gruppe bestehend aus
      - einem Hydroxycarbonsäureesterrest mit der allgemeinen Strukturformel (I): 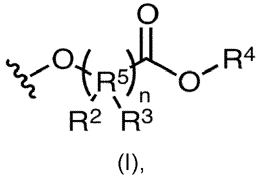 wobei
         jeder R² unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         jeder R³ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         R⁴ eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe, eine C5- bis C15-Aralkylgruppe oder eine C4- bis C14-Arylgruppe bedeutet,
         R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
         n eine ganze Zahl von 0 bis 10 ist,
      - -einem Hydroxycarbonsäureamidrest der allgemeinen Strukturformel (II): 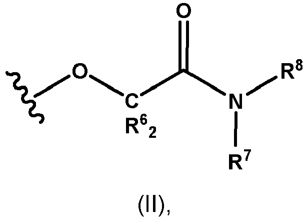 wobei
         jeder R⁶ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
         jeder R⁷ oder R⁸ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeuten,
      - O-C(O)-R⁹, wobei R⁹ H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4- bis C14-Arylgruppe bedeutet und
      - O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4-bis C14-Arylgruppe bedeuten, und
b. mindestens ein Organosilan als Wasserfänger, Alkoholfänger und/oder Hydroxidlonenfänger, wobei das Organosilan
   b1. ein heterozyklisches Organosilan ist, wobei mindestens ein Siliziumatom und mindestens ein Heteroatom direkt miteinander verknüpft sind und das Heteroatom ausgewählt ist aus der Gruppe bestehend aus N, P, S oder O oder
   b2. ein oder mehrere Organosilane sind, ausgewählt aus der Gruppe aus Iminosilanen der allgemeinen Strukturformel (VII), Silanoaminosilanen der allgemeinen Strukturformel (VIII), Aminoschutzgruppen-haltigen Organosilanen (IXa) bis (IXe) abgeleitet von der allgemeinen Strukturformeln (IX) oder Mischungen davon: 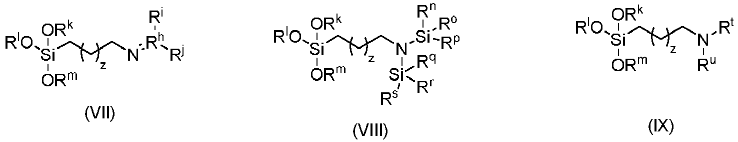 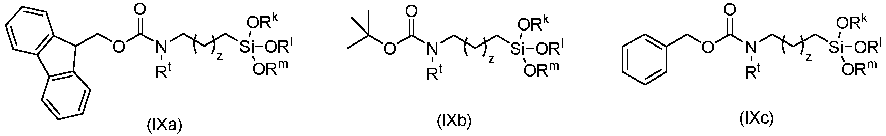 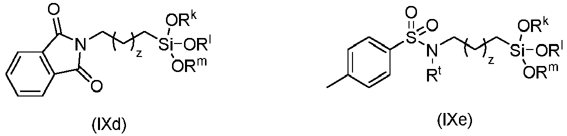 wobei
      - R^{h} C oder Si ist;
      - jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder Rⁿ, R^{o}, R^{p}, R^{q}, R', R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
      - jeder R', R^{u} unabhängig voneinander H, -OR', -C(O)Rⁱ, -C(O)CF₃, -COORⁱ, eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet undz eine ganze Zahl von 1 bis 30 ist und
c. optional wenigstens ein Organopolysiloxan.

### Ausführungsform 2:

Zusammensetzung nach Ausführungsform 1 **dadurch gekennzeichnet, dass** ein oder mehrere heterozyklische Organosilane ausgewählt sind aus der Gruppe der allgemeinen Strukturformeln (III), (Illa), (IV), (IVa), (V), (Va) oder Mischungen davon: 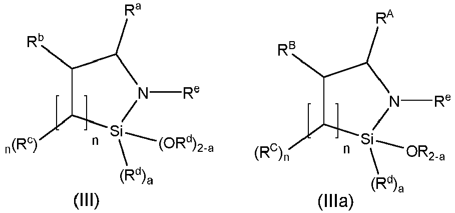 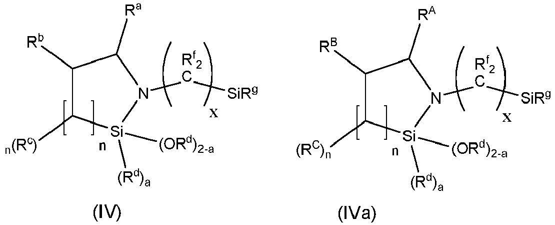 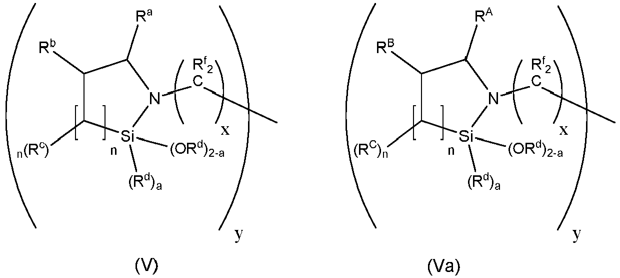 wobei
a 0, 1 oder 2 ist;
x 0 bis 100 bedeutet;
y 1 bis 1000 bedeutet;
n 0 bis 6 bedeutet
   - jeder R^{a}, R^{b}, R^{c}, R^{d}, R^{e}, R^{f} oder R^{g} unabhängig voneinander H oder eine optional substituierte, geradkettige oder verzweigte C1- bis C20-Alkylgruppe, eine optional substituierte, geradkettige oder verzweigte C2-bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
jeder R^{A} und/oder R^{B} und/oder (R^{C})ₙ zusammengenommen einen 4- bis 10 gliedrigen Ring, bevorzugt einen 5- bis 8 gliedrigen Ring, insbesondere bevorzugt einen 5- bis 6 gliedrigen Ring bilden

### Ausführungsform 3:

Zusammensetzung mindestens enthaltend eine Mischung erhältlich durch Vermischen mindestens eines Härters gemäß Anspruch 1, Buchstabe a mit mindestens einem Organosilan gemäß Anspruch 4, Buchstabe b2 und/oder einem heterozyklischen Organosilan gemäß Anspruch 2.

### Ausführungsform 4:

Zusammensetzung nach einer der vorstehenden Ausführungsformen, wobei das Organosilan, insbesondere heterozyklische Organosilan zu maximal 3 Gew.-%, bevorzugt zu maximal 2 Gew.-%, weiter bevorzugt zu maximal 1,5 Gew.-%, insbesondere bevorzugt zu maximal 1,2 Gew.-% jeweils bezogen auf das Gesamtgewicht der Zusammensetzung enthalten ist.

### Ausführungsform 5:

Zusammensetzung nach einer der vorstehenden Ausführungsformen, wobei das Organosilan, insbesondere heterozyklische Organosilan mit einem Anteil von 0,25 Gew-% bis 3 Gew.-%, bevorzugt von 0,25 Gew.-% bis 2 Gew.-%, besonders bevorzugt von 0,5 Gew.-% bis 1,5 Gew.-%, insbesondere bevorzugt von 0,8 Gew.-% bis 1,2 Gew.-%, bezogen auf das Gesamtgewicht der Silikonkautschukmasse, vorliegt.

### Ausführungsform 6:

Zusammensetzung nach einer der vorstehenden Ausführungsformen, wobei das heterozyklische Organosilan ein 4 bis 10-gliedriger Heterozyklus ist.

### Ausführungsform 7:

Zusammensetzung nach einer der vorstehenden Ausführungsformen, wobei das heterozyklische Organosilan ein 5 bis 6-gliedriger Heterozyklus ist.

### Ausführungsform 8:

Zusammensetzung nach einer der vorstehenden Ausführungsformen, wobei das Organosilan, insbesondere heterozyklische Organosilan ausschließlich aus Silizium- und Heteroatomen besteht.

### Ausführungsform 9:

Zusammensetzung nach Ausführungsform 8 oder 9, wobei der Heterozyklus maximal 5 Heteroatome ausgewählt aus der Gruppe bestehend aus Si, N, P, S oder O enthält.

### Ausführungsform 10:

Zusammensetzung nach einer der vorstehenden Ausführungsformen 8 bis 11, wobei der Heterozyklus mindestens ein N enthält.

### Ausführungsform 11:

Zusammensetzung nach einer der vorstehenden Ausführungsformen, wobei an das Organosilan, insbesondere heterozyklische Organosilan mit mindestens einem weiteren cyclischen Ringsystem verknüpft ist.

### Ausführungsform 12:

Zusammensetzung nach einer der vorstehenden Ausführungsformen, wobei das Siliziumatom mindestens einen OR^{d} Rest trägt und jeder R^{d} unabhängig voneinander H oder eine optional substituierte, geradkettige, oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet.

### Ausführungsform 13:

Zusammensetzung nach einer der vorstehenden Ausführungsformen, wobei das Siliziumatom mindestens einen NR^{d1}R^{d1} Rest trägt und jeder R^{d1} unabhängig voneinander H oder eine optional substituierte, geradkettige, oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet.

### Ausführungsform 14:

Zusammensetzung nach einer der vorstehenden Ausführungsformen, wobei das Heteroatom direkt mit einem weiteren Organosilan, bevorzugt mit einem heterozyklischen Organosilan verbunden ist.

### Ausführungsform 15:

Zusammensetzung nach einer der vorstehenden Ausführungsformen, wobei das Heteroatom über ein oder mehrere Kohlenstoffatome mit einem weiteren Organosilan, bevorzugt mit einem heterozyklischen Organosilan verbunden ist.

### Ausführungsform 16:

Zusammensetzung nach einer der vorstehenden Ausführungsformen, wobei das heterozyklische Organosilan mindestens eine der nachfolgenden Strukturformeln aufweist: 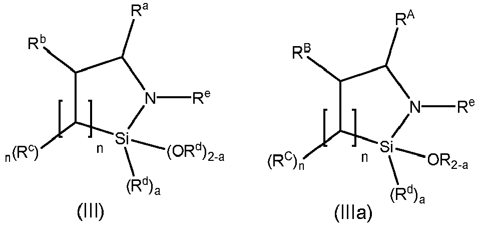 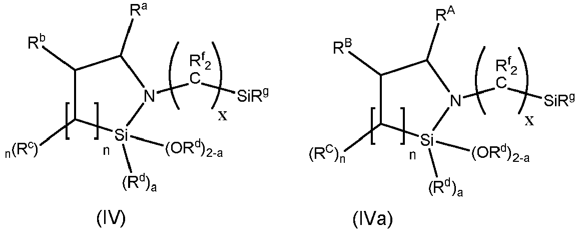 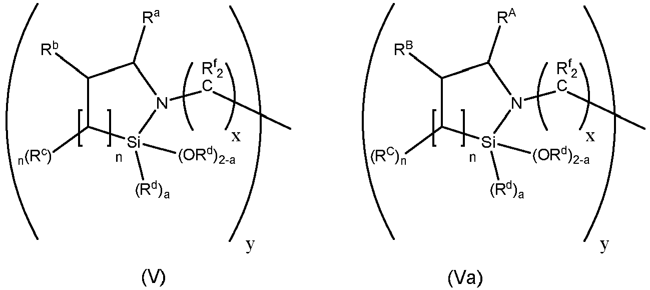 wobei
a 0, 1 oder 2 ist;
x 0 bis 100 bedeutet;
y 1 bis 1000 bedeutet;
n 0 bis 6 bedeutet
   - jeder R^{a}, R^{b}, R^{c}, R^{d}, R^{e}, R^{f} oder R^{g} unabhängig voneinander H oder eine optional substituierte, geradkettige oder verzweigte C1- bis C20-Alkylgruppe, eine optional substituierte, geradkettige oder verzweigte C2-bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
   - jeder R^{A} und/oder R^{B} und/oder (R^{C})ₙ zusammengenommen einen 4- bis 10 gliedrigen Ring, bevorzugt einen 5- bis 8 gliedrigen Ring, insbesondere bevorzugt einen 5- bis 6 gliedrigen Ring bilden.

### Ausführungsform 17:

Zusammensetzung nach einer der vorstehenden Ausführungsformen, wobei das heterozyklische Organosilan mindestens eine der nachfolgenden Strukturformeln aufweist: 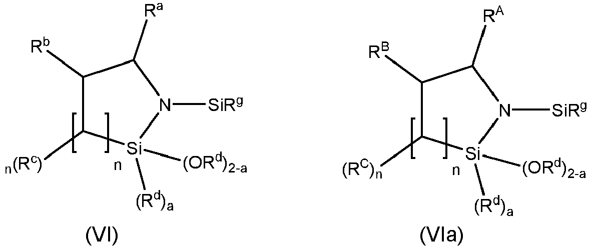 wobei
a 0, 1 oder 2 ist;
x 0 bis 100 bedeutet;
y 1 bis 1000 bedeutet;
n 0 bis 6 bedeutet
   - jeder R^{a}, R^{b}, R^{c}, R^{d}, oder R^{g} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
   - R^{A} und/oder R^{B} und/oder (R^{C})ₙ zusammengenommen einen 4- bis 10-gliedrigen Ring, bevorzugt einen 5- bis 8-gliedrigen Ring, insbesondere bevorzugt einen 5- bis 6-gliedrigen Ring bilden.

### Ausführungsform 18:

Zusammensetzung enthaltend,
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
   m eine ganze Zahl von 0 bis 2 ist,
   jeder R unabhängig voneinander ausgewählt ist aus der Gruppe bestehend aus
      - O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4- bis C14-Arylgruppe bedeuten,
      und
b. mindestens ein heterozyklisches Organosilan das mindestens eine der nachfolgenden Strukturformeln aufweist: 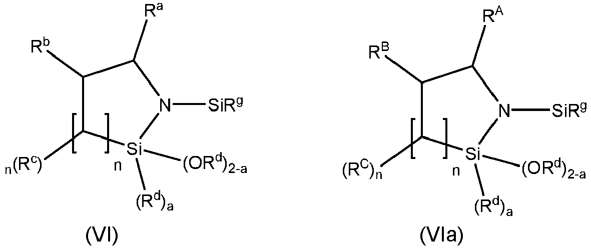 wobei
   a 0, 1 oder 2 ist;
   x 0 bis 100 bedeutet;
   y 1 bis 1000 bedeutet;
   n 0 bis 6 bedeutet;
      - jeder R^{a}, R^{b}, R^{c}, R^{d} oder R^{g} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
      - jeder R^{A} und/oder R^{B} und/oder (R^{C})ₙ zusammengenommen einen 4- bis 10-gliedrigen Ring, bevorzugt einen 5- bis 8-gliedrigen Ring, insbesondere bevorzugt einen 5- bis 6-gliedrigen Ring bilden.

### Ausführungsform 19:

Zusammensetzung nach Ausführungsform 20, wobei der durch R^{A} und/oder R^{B} und/oder (R^{C})ₙ zusammengenommene Ring mindestens ein Heteroatom Si, N, P, S oder O, bevorzugt Si, N, oder S enthalten kann.

### Ausführungsform 20:

Zusammensetzung nach einer der vorstehenden Ausführungsformen, wobei das heterozyklische Organosilan mindestens eine der nachfolgenden Strukturformeln aufweist:

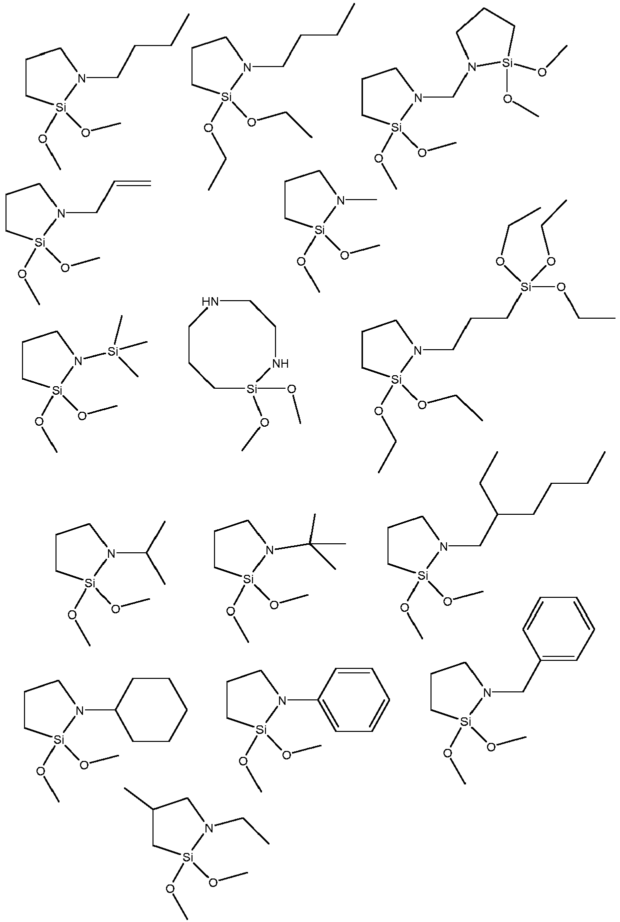

### Ausführungsform 21:

Zusammensetzung nach einer der vorstehenden Ausführungsformen, wobei in der allgemeinen Strukturformel R¹ₘSi(R)₄₋ₘ jeder R¹ unabhängig voneinander ein Methyl-, Ethyl-, Propyl-, Vinyl-, Phenyl- oder ein Allylrest bedeutet.

### Ausführungsform 22:

Zusammensetzung nach einer der vorstehenden Ausführungsformen, wobei im Hydroxycarbonsäureesterrest jeder R² und R³ unabhängig voneinander ausgewählt sind aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

### Ausführungsform 23:

Zusammensetzung nach einer der vorstehenden Ausführungsformen, wobei im Hydroxycarbonsäureesterrest R⁴ ausgewählt ist aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

### Ausführungsform 24:

Zusammensetzung nach einer der vorstehenden Ausführungsformen, wobei im Hydroxycarbonsäureesterrest R⁵ ein divalenter Benzolrest ist oder R⁵ C und R² und R³ H oder R⁵ C und R² H und R³ Methyl- bedeuten.

### Ausführungsform 25:

Zusammensetzung nach einer der vorstehenden Ausführungsformen, wobei im Hydroxycarbonsäureesterrest n eine ganze Zahl von 1 bis 5, insbesondere von 1 bis 3, insbesondere 1, ist.

### Ausführungsform 26:

Zusammensetzung nach einer der vorstehenden Ausführungsformen, wobei der Härter ausgewählt ist aus der Gruppe bestehend aus Tris(methyllactato)vinylsilan, Tris(ethyllactato)vinylsilan, Tris(ethylhexyllactato)vinylsilan, Tris(methylsalicylato)vinyl-silan, Tris(ethylsalicylato)vinylsilan, Tris(ethylhexylsalicylato)vinylsilan, Tris(2-ethylhexylsalicylato)vinylsilan, Tris(isopropylsalicylato)vinylsilan, Tris(methyllactato)-methylsilan, Tris(ethyllactato)methylsilan, Tris(ethylhexyllactato)methylsilan, Tris-(methylsalicylato)methylsilan, Tris(ethylsalicylato)methylsilan, Tris(ethylhexylsalicylato)-methylsilan, Tris(2-ethylhexylsalicylato)methylsilan, Tris(3-aminopropyl)methylsilan, Tris(5-aminopentyl)methylsilan, Tris(methyllactato)propylsilan, Tris(ethyllactato)-propylsilan, Tris(ethylhexyllactato)propylsilan, Tris(ethylsalicylato)propylsilan, Tris-(ethylhexylsalicylato)propylsilan, Tris(2-ethylhexylsalicylato)propylsilan, Tris-(isopropylsalicylato)propylsilan, Tris(3-aminopropyl)propylsilan, Tris(5-aminopentyl)-propylsilan, Tris(methyllactato)ethylsilan, Tris(ethyllactato)ethylsilan, Tris-(ethylhexyllactato)ethylsilan, Tris(methylsalicylato)ethylsilan, Tris(ethylsalicylato)-ethylsilan, Tris(ethylhexylsalicylato)ethylsilan, Tris(2-ethylhexylsalicylato)ethylsilan, Tris(isopropylsalicylato)ethylsilan, Tris(3-aminopropyl)ethylsilan, Tris(5-aminopentyl)-ethylsilan, Tris(methyllactato)phenylsilan, Tris(ethyllactato)phenylsilan, Tris-(ethylhexyllactato)phenylsilan, Tris(methylsalicylato)phenylsilan, Tris(ethylsalicylato)-phenylsilan, Tris(ethylhexylsalicylato)phenylsilan, Tris(2-ethylhexylsalicylato)phenylsilan, Tris(isopropylsalicylato)phenylsilan, Tris(3-aminopropyl)phenylsilan, Tris(5-aminopentyl)-phenylsilan, Tetra(methyllactato)silan, Tetra(ethyllactato)silan, Tetra(ethylhexyllactato)-silan, Tetra(ethylhexylsalicylato)silan, Tetra(2-ethylhexylsalicylato)silan, Tetra-(methylsalicylato)silan, Tetra(isopropylsalicylato)silan, Tetra(ethylsalicylato)silan, Tetra(3-aminopropyl)silan, Tetra(5-aminopentyl)silan und Mischungen davon.

### Ausführungsform 27:

Zusammensetzung nach einer der vorstehenden Ausführungsformen, wobei der Härter zusätzlich eine Verbindung mit der allgemeinen Strukturformel R¹²ₒSi(R)₄₋ₒ enthält, wobei R¹² eine optional substituierte, geradkettige oder verzweigte C1- bis C16-Alkylgruppe, insbesondere eine optional substituierte, geradkettige oder verzweigte C1- bis C12- oder eine C1- bis C8-Alkylgruppe oder eine Methyl- oder Propylgruppe, oder eine optional substituierte, geradkettige oder verzweigte C2- bis C16-Alkenylgruppe, insbesondere eine optional substituierte, geradkettige oder verzweigte C2- bis C12- oder eine C2- bis C8-Alkenylgruppe oder eine Vinylgruppe oder eine optional substituierte C4- bis C14-Arylgruppe oder eine Phenylgruppe ist und R gemäß einem der Ansprüche 1, 15 oder 21 definiert ist und o eine ganze Zahl von 0 bis 2 ist und wobei R¹ₘSi(R)₄₋ₘ und R¹²ₒSi(R)₄₋ₒ nicht gleich sein können.

### Ausführungsform 28:

Zusammensetzung erhältlich durch Vermischen mindestens eines Härters gemäß einer der Ausführungsformen 1 oder 23 bis 28 oder eines Härtergemischs gemäß Ausführungsform 29 mit einem Organosilan, insbesondere heterozyklischen Organosilan gemäß einer der Ausführungsformen 1 bis 22.

### Ausführungsform 29:

Zusammensetzung nach einer der vorstehenden Ausführungsformen, wobei diese wenigstens ein Organopolysiloxan enthält, das bevorzugt ein α, w-funktionelles Diorganopolysiloxan ist.

### Ausführungsform 30:

Zusammensetzung nach Ausführungsform 31, wobei wenigstens eines des mindestens einen Organopolysiloxans ein α, ω-Dihydroxydialkylorganopolysiloxan, bevorzugt ein α, ω-Dihydroxydi-C₁₋₆-alkylorganopolysiloxan und besonders bevorzugt ein α, ω-Dihydroxydimethylpolysiloxan ist.

### Ausführungsform 31:

Zusammensetzung nach Ausführungsform 31 oder 32, wobei wenigstens eines des mindestens einen Organopolysiloxans eine Viskosität von 1.000 bis 500.000 cst, bevorzugt von 20.000 bis 200.000 cst und besonders bevorzugt von 50.000 bis 125.000 cst aufweist.

### Ausführungsform 32:

Zusammensetzung nach einer der vorstehenden Ausführungsformen, wobei diese einen Füllstoff enthält, der bevorzugt aus der aus Kieselsäuren, Ruß, Quarz, Kreiden, Metallsalzen, Metalloxiden und beliebigen Mischungen aus zwei oder mehr der vorgenannten Verbindungen bestehenden Gruppe ausgewählt ist, besonders bevorzugt Kieselsäure und ganz besonders bevorzugt Kieselsäure mit einer spezifischen BET-Oberfläche von 100 bis 200 m²/g ist.

### Ausführungsform 33:

Zusammensetzung nach einer der vorstehenden Ausführungsformen, wobei diese ein Thixotropiermittel enthält, welches bevorzugt Aminopropyltriethoxysilan ist.

### Ausführungsform 34:

Zusammensetzung nach einer der vorstehenden Ausführungsformen, wobei diese einen Weichmacher enthält, welcher bevorzugt ein Polydiorganosiloxan ohne funktionelle Endgruppen, besonders bevorzugt ein Polydialkylsiloxan ohne funktionelle Endgruppen, ganz besonders bevorzugt ein Polydi-C₁₋₆-alkylsiloxan ohne funktionelle Endgruppen und höchst bevorzugt ein Polydimethylsiloxan ohne funktionelle Endgruppen ist.

### Ausführungsform 35:

Zusammensetzung nach einer der vorstehenden Ausführungsformen, wobei diese mindestens einen Katalysator enthält, welcher bevorzugt aus der Gruppe ausgewählt ist, welche aus Zinn-Carboxylaten, Titan-, Zirkonium- oder Aluminium-Verbindungen besteht, besonders bevorzugt aus der Gruppe ausgewählt ist, welche aus Titanasilsesquioxanen (Ti-POSS), Dibutyl-Zinndilaurat, Dibutyl-Zinndivaleriat, Dibutyl-Zinndiacetat, Dibutyl-Zinndineodecanoat, Dibutyl-Zinndiacetylacetonat, Dioctyl-Zinn-bis(2-ethylhexanoat), Dibutyl-Zinndimaleat, Zinn(II)octoat und Butylzinn-tris(2-ethylhexanoat) besteht, und besonders bevorzugt aus der Gruppe ausgewählt ist, welche aus (iBu)₇Si₇O₁₂TiOEt, (C₈H₁₇)₇Si₇O₁₂TiOEt, Dibutylzinndilaurat, Dibutylzinndiacetat und Zinn(II)octoat besteht.

### Ausführungsform 36:

Zusammensetzung nach einer der vorstehenden Ausführungsformen, wobei diese enthält:
a) 30 bis 70 Gew.-% α, ω-Dihydroxydialkylorganopolysiloxan,
b) 1 bis 10 Gew.-% Härter und
c) 0,1 bis 10 Gew.-% Organosilan, insbesondere heterozyklisches Organosilan.

### Ausführungsform 37:

Zusammensetzung nach Ausführungsform 38, wobei diese enthält:
a) 30 bis 70 Gew.-% α, ω-Dihydroxydialkylorganopolysiloxan,
b) 1 bis 10 Gew.-% Härter,
c) 0,1 bis 10 Gew.-% Organosilan, insbesondere heterozyklisches Organosilan,
d) 20 bis 50 Gew.-% Weichmacher,
e) 1 bis 20 Gew.-% Füllstoff und
f) 0,01 bis 1 Gew.-% Katalysator.

### Ausführungsform 38:

Zusammensetzung nach Ausführungsform 39, wobei diese enthält:
a) 40 bis 60 Gew.-% α, ω-Dihydroxydialkylorganopolysiloxan,
b) 3 bis 7 Gew.-% Härter,
c) 0,5 bis 2,5 Gew.-% Organosilan, insbesondere heterozyklisches Organosilan,
d) 25 bis 40 Gew.-% Weichmacher,
e) 5 bis 15 Gew.-% Füllstoff und
f) 0,05 bis 0,5 Gew.-% Katalysator.

### Ausführungsform 39:

Verfahren zur Herstellung einer Zusammensetzung umfassend die folgenden Schritte:
(i) Mischen eines Organopolysiloxans, bevorzugt eines α, ω-Dihydroxydialkylorganopolysiloxans mit einem Vernetzer oder Vernetzergemisch nach einem der vorstehenden Ausführungsformen 1 bis 40 unter Vakuum;
(ii) Einmischen eines Organosilans, insbesondere heterozyklischen Organosilans nach einem der vorstehenden Ausführungsformen 1 bis 40 und eines Katalysators nach Ausführungsform 37 unter Vakuum.

### Ausführungsform 40:

Verfahren zur Herstellung einer Zusammensetzung umfassend die folgenden Schritte:
(i) Mischen eines Organopolysiloxans, bevorzugt eines α, ω-Dihydroxydialkylorganopolysiloxans mit einem Weichmacher nach Ausführungsform 36 und einem Vernetzer oder Vernetzergemisch nach einem der vorstehenden Ausführungsformen 1 bis 40 unter Vakuum;
(ii) Zugabe eines Thixotropiermittels, bevorzugt Aminopropyltriethoxysilan;
(iii) Eindispergieren eines Füllstoffs, insbesondere Kieselsäure;
(iv) Einmischen eines Organosilans, insbesondere heterozyklischen Organosilans nach einem der vorstehenden Ausführungsformen 1 bis 40 und eines Katalysators nach Ausführungsform 37 unter Vakuum.

### Ausführungsform 41:

Verwendung einer Zusammensetzung nach einer der vorstehenden Ausführungsformen 1 bis 40 zur Herstellung einer Silikonkautschukmasse.

### Ausführungsform 42:

Verwendung einer Zusammensetzung nach einer der vorstehenden Ausführungsformen als Dichtungsmittel, Klebstoff, Vergussmasse oder Beschichtungsmittel.

### Ausführungsform 43:

Verwendung eines Organosilans, insbesondere eines heterozyklischen Organosilans nach einer der vorstehenden Ausführungsformen als Stabilisator, wobei dieses an mindestens einem Heteroatom eine Trialkylsilylgruppe, bevorzugt eine Trimethylsilylgruppe trägt.

## Patentansprüche

1. Zusammensetzung enthaltend
a. einen Härter für Silikonkautschukmassen enthaltend eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
jeder R unabhängig voneinander ausgewählt ist aus der Gruppe bestehend aus
- einem Hydroxycarbonsäureesterrest mit der allgemeinen Strukturformel (I): 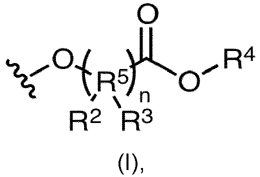 wobei
jeder R² unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
jeder R³ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
R⁴ eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe, eine C5- bis C15-Aralkylgruppe oder eine C4- bis C14-Arylgruppe bedeutet,
R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
n eine ganze Zahl von 0 bis 10 ist,
- -einem Hydroxycarbonsäureamidrest der allgemeinen Strukturformel (II): 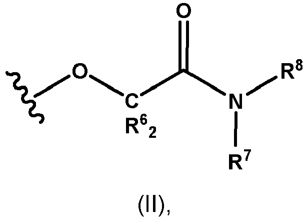 wobei
jeder R⁶ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeutet,
jeder R⁷ oder R⁸ unabhängig voneinander H oder eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe oder eine C4- bis C14-Arylgruppe bedeuten,
- O-C(O)-R⁹, wobei R⁹ H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4- bis C14-Arylgruppe bedeutet und
- O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4-bis C14-Arylgruppe bedeuten,
und
b. mindestens ein Organosilan als Wasserfänger, Alkoholfänger und/oder Hydroxidlonenfänger, wobei das Organosilan
b1. ein heterozyklisches Organosilan ist, wobei mindestens ein Siliziumatom und mindestens ein Heteroatom direkt miteinander verknüpft sind und das Heteroatom ausgewählt ist aus der Gruppe bestehend aus N, P, S oder O oder
b2. ein oder mehrere Organosilane sind, ausgewählt aus der Gruppe aus Iminosilanen der allgemeinen Strukturformel (VII), Silanoaminosilanen der allgemeinen Strukturformel (VIII), Aminoschutzgruppen-haltigen Organosilanen (IXa) bis (IXe) abgeleitet von der allgemeinen Strukturformeln (IX) oder Mischungen davon: 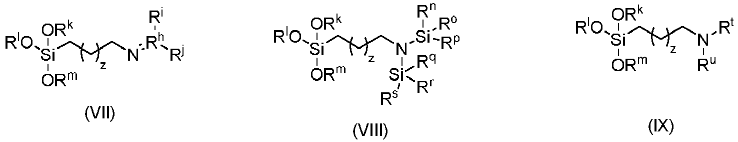 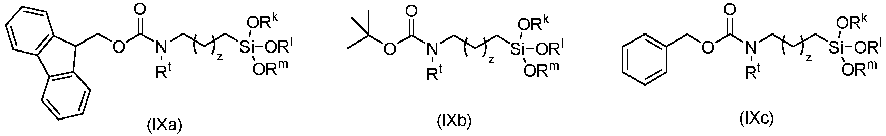 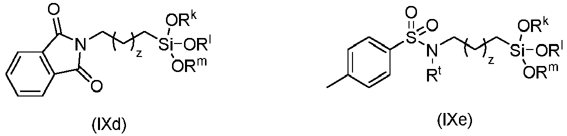 wobei
- R^{h} C oder Si ist;
- jeder R', R^{j}, unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R^{k}, R^{l}, R^{m} unabhängig voneinander H, -C(O)R^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder Rⁿ, R^{o}, R^{p}, R^{q}, R', R^{s} unabhängig voneinander H, -O-R^{t}, -C(O)-R^{t}, -COOR^{t}, eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet;
- jeder R^{t}, R^{u} unabhängig voneinander H, -OR', -C(O)R', -C(O)CF₃, -COORⁱ, eine optional substituierte, geradkettige oder verzweigte C1- bis C16-Alkylgruppe, eine optional substituierte, geradkettige oder verzweigte C2- bis C16-Alkenylgruppe, eine optional substituierte C4- bis C14-Arylgruppe oder eine Schutzgruppe bedeutet, insbesondere eine tert-Butoxycarbonyl-Gruppe, eine Fluorenylmethoxycarbonyl-Gruppe, eine Benzyloxycarbonyl-Gruppe, eine Allyloxycarbonyl-Gruppe, eine optional substituierte Isoindol-1,3-dion-Gruppe oder eine 3-Methyl-Benzolsulfon-Gruppe bedeutet und
z eine ganze Zahl von 1 bis 30 ist und
c. optional wenigstens ein Organopolysiloxan.

2. Zusammensetzung nach Anspruch 1 **dadurch gekennzeichnet, dass** ein oder mehrere heterozyklische Organosilane ausgewählt sind aus der Gruppe der allgemeinen Strukturformeln (III), (Illa), (IV), (IVa), (V), (Va) oder Mischungen davon: 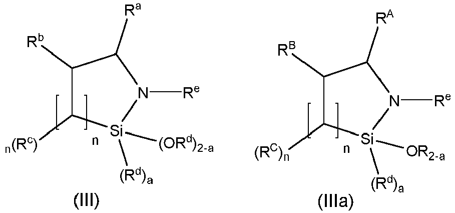 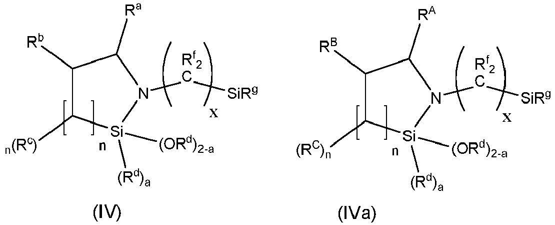 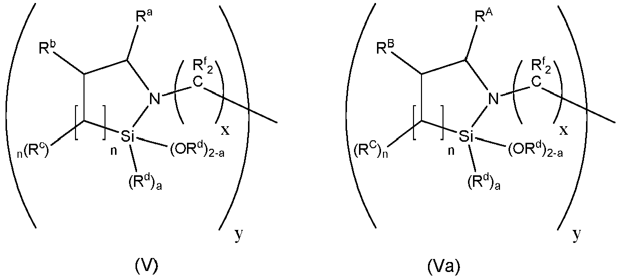 wobei
a 0, 1 oder 2 ist;
x 0 bis 100 bedeutet;
y 1 bis 1000 bedeutet;
n 0 bis 6 bedeutet
- jeder R^{a}, R^{b}, R^{c}, R^{d}, R^{e}, R^{f} oder R^{g} unabhängig voneinander H oder eine optional substituierte, geradkettige oder verzweigte C1- bis C20-Alkylgruppe, eine optional substituierte, geradkettige oder verzweigte C2-bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
- jeder R^{A} und/oder R^{B} und/oder (R^{C})ₙ zusammengenommen einen 4- bis 10 gliedrigen Ring, bevorzugt einen 5- bis 8 gliedrigen Ring, insbesondere bevorzugt einen 5- bis 6 gliedrigen Ring bilden.

3. Zusammensetzung mindestens enthaltend eine Mischung erhältlich durch Vermischen mindestens eines Härters gemäß Anspruch 1, Buchstabe a mit mindestens einem Organosilan gemäß Anspruch 4, Buchstabe b2 und/oder einem heterozyklischen Organosilan gemäß Anspruch 2.

4. Zusammensetzung nach einem der vorstehenden Ansprüche, **dadurch gekennzeichnet, dass** das Organosilan, insbesondere heterozyklische Organosilan zu maximal 3 Gew.-%, bevorzugt zu maximal 2 Gew.-%, weiter bevorzugt zu maximal 1,5 Gew.-%, insbesondere bevorzugt zu maximal 1,2 Gew.-% jeweils bezogen auf das Gesamtgewicht der Zusammensetzung enthalten ist.

5. Zusammensetzung nach einem der vorstehenden Ansprüche, **dadurch gekennzeichnet, dass** das heterozyklische Organosilan ein 4 bis 10-gliedriger Heterozyklus ist.

6. Zusammensetzung nach einem der vorstehenden Ansprüche **dadurch gekennzeichnet, dass** das heterozyklische Organosilan ein 5 bis 6-gliedriger Heterozyklus ist.

7. Zusammensetzung nach einem der vorstehenden Ansprüche 4 bis 6, **dadurch gekennzeichnet, dass** der Heterozyklus mindestens ein N enthält.

8. Zusammensetzung nach einem der vorstehenden Ansprüche, **dadurch gekennzeichnet, dass** das Siliziumatom im Organosilan mindestens einen OR^{d} Rest trägt und jeder R^{d} unabhängig voneinander H oder eine optional substituierte, geradkettige, oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet.

9. Zusammensetzung nach einem der vorstehenden Ansprüche, **dadurch gekennzeichnet, dass** das heterozyklische Organosilan mindestens eine der nachfolgenden Strukturformeln aufweist: 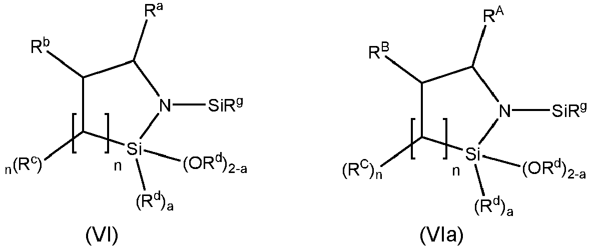 wobei
a 0, 1 oder 2 ist;
x 0 bis 100 bedeutet;
y 1 bis 1000 bedeutet;
n 0 bis 6 bedeutet
- jeder R^{a}, R^{b}, R^{c}, R^{d}, oder R^{g} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
- R^{A} und/oder R^{B} und/oder (R^{C})ₙ zusammengenommen einen 4- bis 10-gliedrigen Ring, bevorzugt einen 5- bis 8-gliedrigen Ring, insbesondere bevorzugt einen 5- bis 6-gliedrigen Ring bilden.

10. Zusammensetzung enthaltend,
a. einen Härter für Silikonkautschukmassen enthaltend eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
jeder R unabhängig voneinander ausgewählt ist aus der Gruppe bestehend aus
- O-N=CR¹⁰R¹¹, wobei R¹⁰ und R¹¹ unabhängig voneinander H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine C4- bis C14-Cycloalkylgruppe oder eine C4- bis C14-Arylgruppe bedeuten,
und
b. mindestens ein heterozyklisches Organosilan das mindestens eine der nachfolgenden Strukturformeln aufweist: 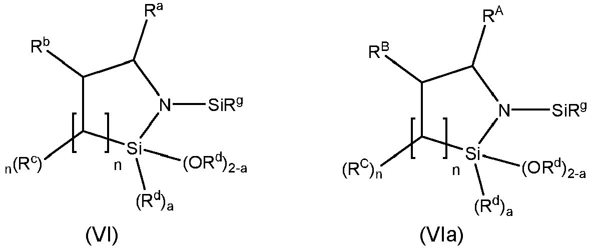 wobei
a 0, 1 oder 2 ist;
x 0 bis 100 bedeutet;
y 1 bis 1000 bedeutet;
n 0 bis 6 bedeutet;
- jeder R^{a}, R^{b}, R^{c}, R^{d} oder R^{g} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder zyklische C4- bis C20 Alkinylgruppe oder eine optional substituierte, geradkettige oder verzweigte C2- bis C20 Heteroalkylgruppe, eine optional substituierte, geradkettige, verzweigte oder zyklische C3- bis C20 Heteroalkenylgruppe oder eine optional substituierte C4- bis C14-Aryl- oder Heteroarylgruppe bedeutet;
- jeder R^{A} und/oder R^{B} und/oder (R^{C})ₙ zusammengenommen einen 4- bis 10-gliedrigen Ring, bevorzugt einen 5- bis 8-gliedrigen Ring, insbesondere bevorzugt einen 5- bis 6-gliedrigen Ring bilden.

11. Zusammensetzung nach einem der vorstehenden Ansprüchen, **dadurch gekennzeichnet, dass** diese wenigstens ein Organopolysiloxan enthält, das bevorzugt ein α, ω-funktionelles Diorganopolysiloxan ist.

12. Zusammensetzung nach einem der vorstehenden Ansprüche, **dadurch gekennzeichnet, dass** diese enthält:
a) 30 bis 70 Gew.-% α, ω-Dihydroxydialkylorganopolysiloxan, gemäß Anspruch 1, Buchstabe c.;
b) 1 bis 10 Gew.-% Härter gemäß Anspruch 1, Buchstabe a und
c) 0,1 bis 10 Gew.-% Organosilan gemäß Anspruch 1, Buchstabe b, insbesondere heterozyklisches Organosilan.

13. Verfahren zur Herstellung einer Zusammensetzung umfassend die folgenden Schritte:
(i) Mischen eines Organopolysiloxans, bevorzugt eines α, ω-Dihydroxydialkylorganopolysiloxans mit einem Härter oder Härtergemisch nach einem der vorstehenden Ansprüche 1 bis 12 unter Vakuum;
(ii) Einmischen eines Organosilans, insbesondere eines heterozyklischen Organosilans nach einem der vorstehenden Ansprüche 1 bis 12 und eines Katalysators unter Vakuum, wobei der Katalysator aus der Gruppe ausgewählt ist, welche bevorzugt aus Zinn-Carboxylaten, Titan-, Zirkonium- oder Aluminium-Verbindungen besteht, besonders bevorzugt aus der Gruppe ausgewählt ist, welche aus Titanasilsesquioxanen (Ti-POSS), Dibutyl-Zinndilaurat, Dibutyl-Zinndivaleriat, Dibutyl-Zinndiacetat, Dibutyl-Zinndineodecanoat, Dibutyl-Zinndiacetylacetonat, Dioctyl-Zinn-bis(2-ethylhexanoat), Dibutyl-Zinndimaleat, Zinn(II)octoat und Butylzinn-tris(2-ethylhexanoat) besteht, und besonders bevorzugt aus der Gruppe ausgewählt ist, welche aus (iBu)₇Si₇O₁₂TiOEt, (C₈H₁₇)₇Si₇O₁₂TiOEt, Dibutylzinndilaurat, Dibutylzinndiacetat und Zinn(II)octoat besteht.

14. Verwendung einer Zusammensetzung nach einem der vorstehenden Ansprüche 1 bis 10 zur Herstellung einer Silikonkautschukmasse.

15. Verwendung einer Zusammensetzung nach einem der vorstehenden Ansprüche als Dichtungsmittel, Klebstoff, Vergussmasse oder Beschichtungsmittel.

## Claims

1. Composition comprising
a. a curing agent for silicone rubber masses comprising a compound having the general structural formula R¹ₘSi(R)₄₋ₘ,
wherein
each R¹ independently represents an optionally substituted, straight-chain or branched C1 to C16 alkyl group, an optionally substituted, straight-chain or branched C2 to C16 alkenyl group or an optionally substituted C4 to C14 aryl group,
m is an integer from 0 to 2,
each R is independently selected from the group consisting of
- a hydroxycarboxylic acid ester residue having the general structural formula (I): 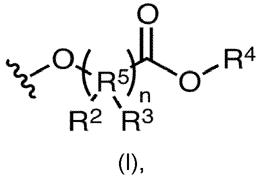 wherein
each R² independently represents H or an optionally substituted, straight-chain or branched C1 to C16 alkyl group, an optionally substituted, straight-chain or branched C2 to C16 alkenyl group, or an optionally substituted, straight-chain or branched C2 to C16 alkynyl group, or a C4 to C14 aryl group,
each R³ independently represents H or an optionally substituted, straight-chain or branched C1 to C16 alkyl group, an optionally substituted, straight-chain or branched C2 to C16 alkenyl group, or an optionally substituted, straight-chain or branched C2 to C16 alkynyl group, or a C4 to C14 aryl group,
R⁴ represents an optionally substituted, straight-chain or branched C1 to C16 alkyl group, an optionally substituted, straight-chain or branched C2 to C16 alkenyl group or an optionally substituted, straight-chain or branched C2 to C16 alkynyl group, a C4 to C14 cycloalkyl group, a C5 to C15 aralkyl group or a C4 to C14 aryl group,
R⁵ is C or an optionally substituted saturated or partially unsaturated cyclic ring system having 4 to 14 C atoms or an optionally substituted aromatic group having 4 to 14 C atoms, and
n is an integer from 0 to 10,
- a hydroxycarboxylic acid amide residue of the general structural formula (II): 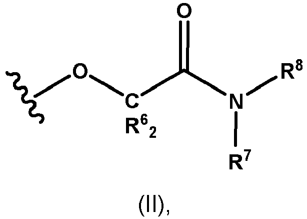 wherein
each R⁶ independently represents H or an optionally substituted, straight-chain or branched C1 to C16 alkyl group, an optionally substituted, straight-chain or branched C2 to C16 alkenyl group, or an optionally substituted, straight-chain or branched C2 to C16 alkynyl group, or a C4 to C14 aryl group,
each R⁷ or R⁸ independently represents H or an optionally substituted, straight-chain or branched C1 to C16 alkyl group, an optionally substituted, straight-chain or branched C2 to C16 alkenyl group or an optionally substituted, straight-chain or branched C2 to C16 alkynyl group or a C4 to C14 aryl group,
- O-C(O)-R⁹, wherein R⁹ means H, an optionally substituted, straight-chain or branched C1 to C16 alkyl group, an optionally substituted, straight-chain or branched C2 to C16 alkenyl group or an optionally substituted, straight-chain or branched C2 to C16 alkynyl group, a C4 to C14 cycloalkyl group or a C4 to C14 aryl group, and
- O-N=CR¹⁰R¹¹, wherein R¹⁰ and R¹¹ independently mean H, an optionally substituted straight-chain or branched C1 to C16 alkyl group, an optionally substituted straight-chain or branched C2 to C16 alkenyl group or an optionally substituted straight-chain or branched C2 to C16 alkynyl group, a C4 to C14 cycloalkyl group or a C4 to C14 aryl group,
and
b. at least one organosilane as water scavenger, alcohol scavenger and/or hydroxide ion scavenger wherein the organosilane
b1. is a heterocyclic organosilane, wherein at least one silicon atom and at least one heteroatom are directly linked to each other and the heteroatom is selected from the group consisting of N, P, S or O or
b2. one or more organosilanes are selected from the group consisting of iminosilanes of the general structural formula (VII), silanoaminosilanes of the general structural formula (VIII), amino-protecting group-containing organosilanes (IXa) to (IXe) derived from the general structural formulae (IX) or mixtures thereof: 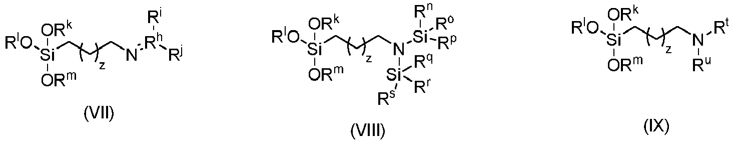 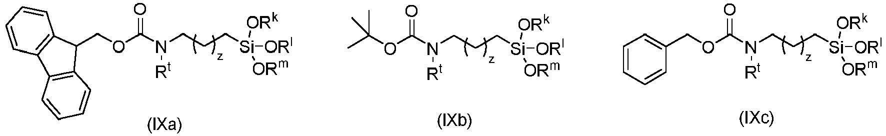 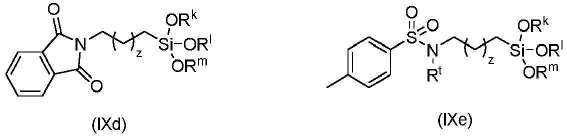 wherein
- R^{h} is C or Si;
- each R', R^{j} are independently H, -C(O)R^{t}, an optionally substituted C1 to C16 straight-chain or branched alkyl group, an optionally substituted C2 to C16 straight-chain or branched alkenyl group, or an optionally substituted C4 to C14 aryl group; or
- each R^{k}, R^{l}, R^{m} independently represents H, -C(O)R^{t}, an optionally substituted straight-chain or branched C1 to C16 alkyl group, an optionally substituted straight-chain or branched C2 to C16 alkenyl group or an optionally substituted C4 to C14 aryl group; or
- each Rⁿ, R°, R^{p}, R^{q}, R', R^{s} independently represents H, -O-R^{t}, -C(O)-R^{t}, -COOR^{t}, an optionally substituted C1 to C16 straight-chain or branched alkyl group, an optionally substituted C2 to C16 straight-chain or branched alkenyl group, or an optionally substituted C4 to C14 aryl group; and
- each R^{t}, R^{u} independently represents H, -OR', -C(O)R', -C(O)CF₃, -COOR', an optionally substituted straight-chain or branched C1 to C16 alkyl group, an optionally substituted straight-chain or branched C2 to C16 alkenyl group, an optionally substituted C4 to C14 aryl group or a protecting group, in particular a tert-butoxycarbonyl group, a fluorenylmethoxycarbonyl group, a benzyloxycarbonyl group, an allyloxycarbonyl group, an optionally substituted isoindole-1,3-dione group or a 3-methyl-benzenesulphone group, and
z is an integer of 1 to 30; and
c. optionally at least one organopolysiloxane.

2. Composition according to claim 1 **characterized in that** one or more heterocyclic organosilanes are selected from the group of the general structural formulae (III), (Illa), (IV), (IVa), (V), (Va) or mixtures thereof: 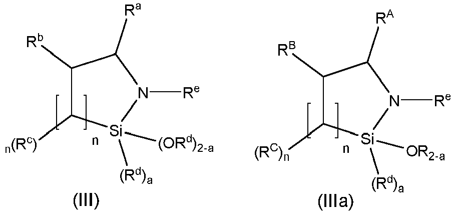 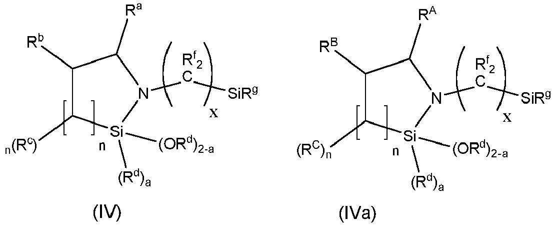 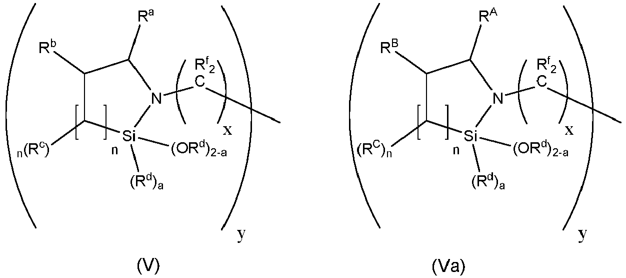 wherein
a is 0, 1 or 2;
x means 0 to 100;
y means 1 to 1000;
n means 0 to 6
- each R^{a}, R^{b}, R^{c}, R^{d}, R^{e}, R^{f} or R^{g} is independently H or an optionally substituted, straight-chain or branched C1 to C20 alkyl group, an optionally substituted, straight-chain or branched C2 to C20 alkenyl group, an optionally substituted C3 to C20 cycloalkyl group, an optionally substituted C4 to C20 cycloalkenyl group, an optionally substituted, straight-chain, branched or cyclic C4 to C20 alkynyl group or an optionally substituted, straight-chain or branched C2 to C20 heteroalkyl group, an optionally substituted, straight-chain, branched or cyclic C3 to C20 heteroalkenyl group or an optionally substituted C4 to C14 aryl or heteroaryl group;
- each R^{A} and/or R^{B} and/or (R^{C})ₙ taken together form a 4- to 10-membered ring, preferably a 5- to 8-membered ring, especially preferably a 5- to 6-membered ring.

3. Composition at least comprising a mixture obtainable by mixing at least one curing agent according to claim 1, letter a with at least one organosilane according to claim 4. letter b2 and/or a heterocyclic organosilane according to claim 2.

4. Composition according to one of the preceding claims, **characterized in that** the organosilane, in particular heterocyclic organosilane, is contained at a maximum of 3 wt.-%, preferably at a maximum of 2 wt.-%, more preferably at a maximum of 1.5 wt.-%, in particular preferably at a maximum of 1.2 wt.-%, in each case based on the total weight of the composition.

5. Composition according to any of the preceding claims, **characterized in that** the heterocyclic organosilane is a 4- to 10-membered heterocycle.

6. Composition according to one of the preceding claims **characterized in that** the heterocyclic organosilane is a 5- to 6-membered heterocycle.

7. Composition according to any of the preceding claims 4 to 6, **characterized in that** the heterocycle contains at least one N.

8. Composition according to any of the preceding claims, **characterized in that** the silicon atom in the organosilane carries at least one OR^{d} residue and each R^{d} independently carries H or an optionally substituted, straight-chain or branched C1 to C20 alkyl group, an optionally substituted, straight-chain or branched C2 to C20 alkenyl group, an optionally substituted C3 to C20 cycloalkyl group, represents an optionally substituted C4 to C20 cycloalkenyl group, an optionally substituted, straight-chain, branched or cyclic C4 to C20 alkynyl group or an optionally substituted, straight-chain or branched C2 to C20 heteroalkyl group, an optionally substituted, straight-chain, branched or cyclic C3 to C20 heteroalkenyl group or an optionally substituted C4 to C14 aryl or heteroaryl group

9. Composition according to any of the above claims, **characterized in that** the heterocyclic organosilane has at least one of the following structural formulae: 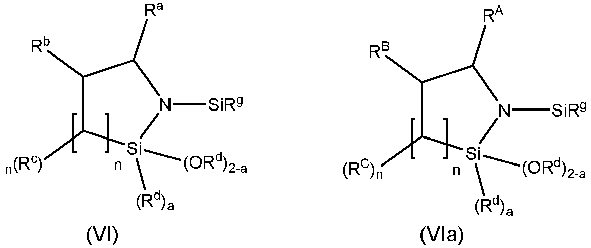 wherein
a is 0, 1 or 2;
x means 0 to 100;
y means 1 to 1000;
n means 0 to 6
- each R^{a}, R^{b}, R^{c}, R^{d}, or R^{g} is independently H or an optionally substituted, straight-chain or branched C1 to C20 alkyl group, an optionally substituted, straight-chain or branched C2 to C20 alkenyl group, an optionally substituted C3 to C20 cycloalkyl group, an optionally substituted C4 to C20 cycloalkenyl group, an optionally substituted, straight-chain, branched or cyclic C4 to C20 alkynyl group or an optionally substituted, straight-chain or branched C2 to C20 heteroalkyl group, an optionally substituted, straight-chain, branched or cyclic C3 to C20 heteroalkenyl group or an optionally substituted C4 to C14 aryl or heteroaryl group;
- R^{A} and/or R^{B} and/or (R^{C})ₙ taken together form a 4- to 10-membered ring, preferably a 5- to 8-membered ring, in particular preferably a 5- to 6-membered ring.

10. Composition comprising,
a. a curing agent for silicone rubber masses comprising a compound having the general structural formula R¹ₘSi(R)₄₋ₘ,
wherein
each R¹ independently means an optionally substituted straight-chain or branched C1 to C16 alkyl group, an optionally substituted straight-chain or branched C2 to C16 alkenyl group or an optionally substituted C4 to C14 aryl group,
m is an integer from 0 to 2,
each R is independently selected from the group consisting of
- O-N=CR¹⁰R¹¹, wherein R¹⁰ and R¹¹ independently means H, an optionally substituted straight-chain or branched C1 to C16 alkyl group, an optionally substituted straight-chain or branched C2 to C16 alkenyl group or an optionally substituted straight-chain or branched C2 to C16 alkynyl group, a C4 to C14 cycloalkyl group or a C4 to C14 aryl group,
and
b. at least one heterocyclic organosilane having at least one of the following structural formulae: 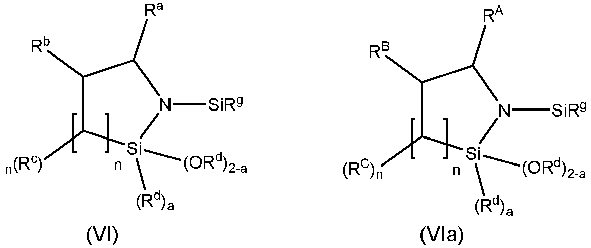 wherein
a is 0, 1 or 2;
x means 0 to 100;
y means 1 to 1000;
n means 0 to 6;
- each R^{a}, R^{b}, R^{c}, R^{d} or R^{g} is independently H or an optionally substituted, straight-chain or branched C1 to C20 alkyl group, an optionally substituted, straight-chain or branched C2 to C20 alkenyl group, an optionally substituted C3 to C20 cycloalkyl group, an optionally substituted C4 to C20 cycloalkenyl group, an optionally substituted, straight-chain, branched or cyclic C4 to C20 alkynyl group or an optionally substituted, straight-chain or branched C2 to C20 heteroalkyl group, an optionally substituted, straight-chain, branched or cyclic C3 to C20 heteroalkenyl group or an optionally substituted C4 to C14 aryl or heteroaryl group;
- each R^{A} and/or R^{B} and/or (R^{C})ₙ taken together form a 4- to 10-membered ring, preferably a 5- to 8-membered ring, especially preferably a 5- to 6-membered ring.

11. Composition according to one of the preceding claims, **characterized in that** it contains at least one organopolysiloxane, preferably a α, ω-functional diorganopolysiloxane.

12. Composition according to one of the above claims, **characterized in that** it contains
a) 30 to 70 wt.-% α, ω-dihydroxydialkyl organopolysiloxane, according to claim 1, letter c.;
b) 1 to 10 wt.-% of curing agent according to claim 1, letter a, and
c) 0.1 to 10 wt.-% organosilane according to claim 1, letter b, in particular heterocyclic organosilane.

13. A process for preparing a composition comprising the following steps:
(i) Mixing an organopolysiloxane, preferably an α, ω-dihydroxydialkyl organopolysiloxane with a curing agent or a curing agent mixture according to one of the preceding claims 1 to 12 under vacuum;
(ii) Mixing in an organosilane, in particular a heterocyclic organosilane according to one of the preceding claims 1 to 12 and a catalyst under vacuum, wherein the catalyst is selected from the group which preferably consists of tin carboxylates, titanium, zirconium or aluminium compounds, particularly preferably selected from the group which consists of titanium silsesquioxanes (Ti-POSS), dibutyl tin dilaurate, dibutyl tin valeriate, dibutyl tin diacetate, dibutyl tin dineodecanoate, dibutyl tin diacetylacetonate, dioctyl tin bis(2-ethylhexanoate), dibutyl tin dimaleate, tin(II) octoate and butyltin tris(2-ethylhexanoate), and is particularly preferably selected from the group consisting of (iBu)₇Si₇O₁₂TiOEt, (C₈H₁₇)₇Si₇O₁₂TiOEt, dibutyltin dilaurate, dibutyltin diacetate and tin(II) octoate.

14. Use of a composition according to any of the preceding claims 1 to 10 for the manufacture of a silicone rubber composition.

15. Use of a composition according to any of the preceding claims as a sealant, adhesive, potting compound or coating agent.

## Revendications

1. Composition contenant :
a. un durcisseur pour des masses de caoutchouc silicone contenant un composé de formule structurale générale R¹ₘSi(R)₄₋ₘ,
dans laquelle
chaque R¹ représente indépendamment un groupe alkyle en C1 à C16 à chaîne droite ou ramifiée, éventuellement substitué, un groupe alcényle en C2 à C16 à chaîne droite ou ramifiée, éventuellement substitué, ou un groupe aryle en C4 à C14, éventuellement substitué,
m est un nombre entier de 0 à 2,
chaque R est indépendamment choisi dans le groupe constitué par :
- un résidu ester d'acide hydroxycarboxylique de formule structurale générale (I) : 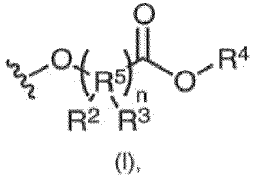 dans laquelle
chaque R² représente indépendamment H ou un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, ou un groupe aryle en C4 à C14,
chaque R³ représente indépendamment H ou un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, ou un groupe aryle en C4 à C14,
R⁴ représente un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, un groupe cycloalkyle en C4 à C14, un groupe aralkyle en C5 à C15 ou un groupe aryle en C4 à C14, R⁵ représente C ou un système cyclique saturé ou partiellement insaturé, éventuellement substitué, ayant de 4 à 14 atomes de C ou un groupe aromatique éventuellement substitué ayant de 4 à 14 atomes de C, et
n est un nombre entier de 0 à 10,
- un résidu amide d'acide hydroxycarboxylique de formule structurale générale (II) : 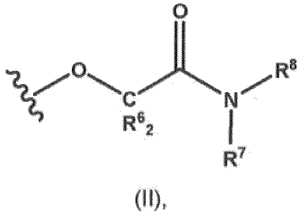 dans laquelle
chaque R⁶ représente indépendamment H ou un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, ou un groupe aryle en C4 à C14,
chaque R⁷ ou R⁸ représente indépendamment H ou un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, ou un groupe aryle en C4 à C14,
- O-C(O)-R⁹, où R⁹ représente H, un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, un groupe cycloalkyle en C4 à C14 ou un groupe aryle en C4 à C14 et
- O-N=CR¹⁰R¹¹, où R¹⁰ et R¹¹ représentent indépendamment H, un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, un groupe cycloalkyle en C4 à C14 ou un groupe aryle en C4 à C14,
et
b. au moins un organosilane en tant que capteur d'eau, capteur d'alcool et/ou capteur d'ions hydroxyde, l'organosilane étant
b1. un organosilane hétérocyclique, dans lequel au moins un atome de silicium et au moins un hétéroatome sont directement liés l'un à l'autre et l'hétéroatome est choisi dans le groupe constitué par N, P, S ou O, ou
b2. un ou plusieurs organosilanes choisis dans le groupe des iminosilanes de formule structurale générale (VII), des silanoaminosilanes de formule structurale générale (VIII), des organosilanes contenant des groupes amino-protecteurs (IXa) à (IXe) dérivés des formules structurales générales (IX) ou de leurs mélanges : 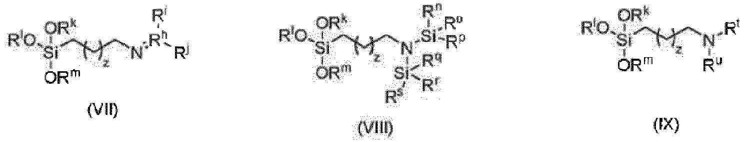 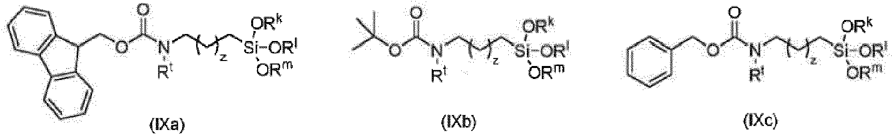 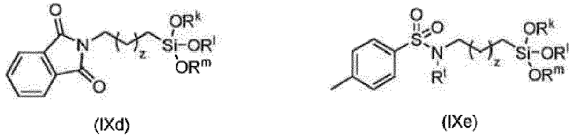 où
- R^{h} est C ou Si ;
- chaque R', R^{j} représente indépendamment H, -C(O)R^{t}, un groupe alkyle en C1 à C16 à chaîne droite ou ramifiée, éventuellement substitué, un groupe alcényle en C2 à C16 à chaîne droite ou ramifiée, éventuellement substitué, ou un groupe aryle en C4 à C14, éventuellement substitué ;
- chaque R^{k}, R', R^{m} représente indépendamment H, -C(O)R^{t}, un groupe alkyle en C1 à C16 à chaîne droite ou ramifiée, éventuellement substitué, un groupe alcényle en C2 à C16 à chaîne droite ou ramifiée, éventuellement substitué, ou un groupe aryle en C4 à C14, éventuellement substitué ;
- chaque Rⁿ, R^{o}, R^{p}, R^{q}, R^{r}, R^{s} représente indépendamment H, -O-R^{t}, -C(O)-R^{t}, - COOR^{t}, un groupe alkyle en C1 à C16 à chaîne droite ou ramifiée, éventuellement substitué, un groupe alcényle en C2 à C16 à chaîne droite ou ramifiée, éventuellement substitué, ou un groupe aryle en C4 à C14, éventuellement substitué ;
- chaque R^{t}, R^{u} représente indépendamment H, -OR', -C(O)R', -C(O)CF₃, -COOR', un groupe alkyle en C1 à C16, à chaîne droite ou ramifiée, éventuellement substitué, un groupe alcényle en C2 à C16, à chaîne droite ou ramifiée, éventuellement substitué, un groupe aryle en C4 à C14, éventuellement substitué, ou un groupe protecteur, en particulier représente un groupe tert-butoxycarbonyle, un groupe fluorénylméthoxycarbonyle, un groupe benzyloxycarbonyle, un groupe allyloxycarbonyle, un groupe isoindole-1,3-dione, éventuellement substitué, ou un groupe 3-méthylbenzènesulfone, et
z est un nombre entier de 1 à 30, et
c. éventuellement au moins un organopolysiloxane.

2. Composition selon la revendication 1, **caractérisée en ce qu'**un ou plusieurs organosilanes hétérocycliques sont choisis dans le groupe des formules structurales générales (III), (IIIa), (IV), (IVa), (V), (Va) ou de leurs mélanges : 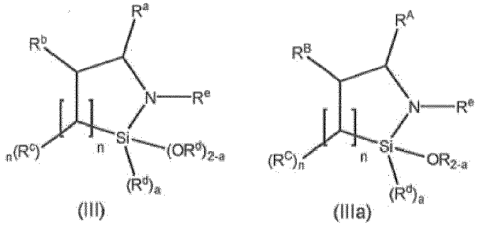 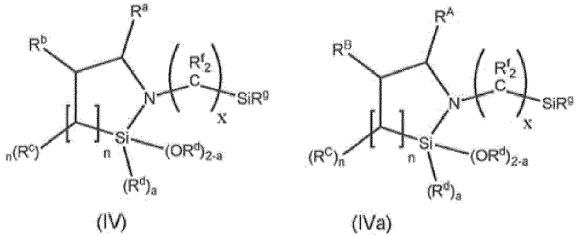 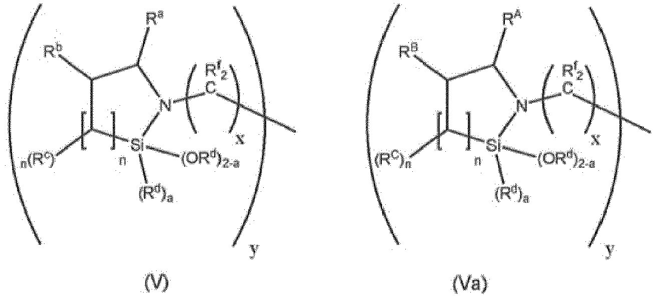 où
a est égal à 0, 1 ou 2 ;
x représente 0 à 100 ;
y représente 1 à 1000 ;
n représente 0 à 6
- chaque R^{a}, R^{b}, R^{c}, R^{d}, R^{e}, R^{f} ou R^{g} représente indépendamment H ou un groupe alkyle en C1 à C20 à chaîne droite ou ramifiée, éventuellement substitué, un groupe alcényle en C2 à C20 à chaîne droite ou ramifiée, éventuellement substitué, un groupe cycloalkyle en C3 à C20, éventuellement substitué, un groupe cycloalcényle en C4 à C20, éventuellement substitué, un groupe alcynyle en C4 à C20 à chaîne droite, ramifiée ou cyclique, éventuellement substitué, ou un groupe hétéroalkyle en C2 à C20 à chaîne droite ou ramifiée, éventuellement substitué, un groupe hétéroalcényle en C3 à C20 à chaîne droite, ramifiée ou cyclique, éventuellement substitué, ou un groupe aryle ou hétéroaryle en C4 à C14, éventuellement substitué ;
- chaque R^{A} et/ou R^{B} et/ou (R^{C})ₙ, pris ensemble, forment un cycle de 4 à 10 chaînons, de préférence un cycle de 5 à 8 chaînons, de manière particulièrement préférée un cycle de 5 à 6 chaînons.

3. Composition contenant au moins un mélange pouvant être obtenu par mélange d'au moins un durcisseur selon la revendication 1, lettre a avec au moins un organosilane selon la revendication 4, lettre b2 et/ou un organosilane hétérocyclique selon la revendication 2.

4. Composition selon l'une des revendications précédentes, **caractérisée en ce que** l'organosilane, en particulier l'organosilane hétérocyclique est contenu à raison de 3 % en poids maximum, de préférence à raison de 2 % en poids maximum, davantage de préférence à raison de 1,5 % en poids maximum, de manière particulièrement préférée à raison de 1,2 % en poids maximum, chaque fois par rapport au poids total de la composition.

5. Composition selon l'une des revendications précédentes, **caractérisée en ce que** l'organosilane hétérocyclique est un hétérocycle de 4 à 10 chaînons.

6. Composition selon l'une des revendications précédentes, **caractérisée en ce que** l'organosilane hétérocyclique est un hétérocycle de 5 à 6 chaînons.

7. Composition selon l'une des revendications 4 à 6 précédentes, **caractérisée en ce que** l'hétérocycle contient au moins un N.

8. Composition selon l'une des revendications précédentes, **caractérisée en ce que** l'atome de silicium porte au moins un résidu OR^{d} et chaque R^{d} représente indépendamment H ou un groupe alkyle en C1 à C20 à chaîne droite ou ramifiée, éventuellement substitué, un groupe alcényle en C2 à C20 à chaîne droite ou ramifiée, éventuellement substitué, un groupe cycloalkyle en C3 à C20, éventuellement substitué, un groupe cycloalcényle en C4 à C20, éventuellement substitué, un groupe alcynyle en C4 à C20 à chaîne droite, ramifiée ou cyclique, éventuellement substitué, ou un groupe hétéroalkyle en C2 à C20 à chaîne droite ou ramifiée, éventuellement substitué, un groupe hétéroalcényle en C3 à C20 à chaîne droite, ramifiée ou cyclique, éventuellement substitué, ou un groupe aryle ou hétéroaryle en C4 à C14, éventuellement substitué.

9. Composition selon l'une des revendications précédentes, **caractérisée en ce que** l'organosilane hétérocyclique présente au moins l'une des formules structurales suivantes : 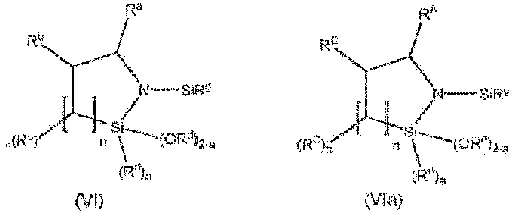 où
a est égal à 0, 1 ou 2 ;
x représente 0 à 100 ;
y représente 1 à 1000 ;
n représente 0 à 6
- chaque R^{a}, R^{b}, R^{c}, R^{d} ou R^{g} représente indépendamment H ou un groupe alkyle en C1 à C20 à chaîne droite ou ramifiée, éventuellement substitué, un groupe alcényle en C2 à C20 à chaîne droite ou ramifiée, éventuellement substitué, un groupe cycloalkyle en C3 à C20, éventuellement substitué, un groupe cycloalcényle en C4 à C20, éventuellement substitué, un groupe alcynyle en C4 à C20 à chaîne droite, ramifiée ou cyclique, éventuellement substitué, ou un groupe hétéroalkyle en C2 à C20 à chaîne droite ou ramifiée, éventuellement substitué, un groupe hétéroalcényle en C3 à C20 à chaîne droite, ramifiée ou cyclique, éventuellement substitué, ou un groupe aryle ou hétéroaryle en C4 à C14, éventuellement substitué ;
- R^{A} et/ou R^{B} et/ou (R^{C})ₙ, pris ensemble, forment un cycle de 4 à 10 chaînons, de préférence un cycle de 5 à 8 chaînons, de manière particulièrement préférée un cycle de 5 à 6 chaînons.

10. Composition contenant :
a. un durcisseur pour des masses de caoutchouc silicone contenant un composé de formule structurale générale R¹ₘSi(R)₄₋ₘ,
dans laquelle
chaque R¹ représente indépendamment un groupe alkyle en C1 à C16 à chaîne droite ou ramifiée, éventuellement substitué, un groupe alcényle en C2 à C16 à chaîne droite ou ramifiée, éventuellement substitué, ou un groupe aryle en C4 à C14, éventuellement substitué,
m est un nombre entier de 0 à 2,
chaque R est indépendamment choisi dans le groupe constitué par :
- O-N=CR¹⁰R¹¹, où R¹⁰ et R¹¹ représentent indépendamment H, un groupe alkyle en C1 à C16 à chaîne droite ou ramifiée, éventuellement substitué, un groupe alcényle en C2 à C16 à chaîne droite ou ramifiée, éventuellement substitué, ou un groupe alcynyle en C2 à C16 à chaîne droite ou ramifiée, éventuellement substitué, un groupe cycloalkyle en C4 à C14 ou un groupe aryle en C4 à C14,
et
b. au moins un organosilane hétérocyclique qui présente au moins l'une des formules structurales suivantes : 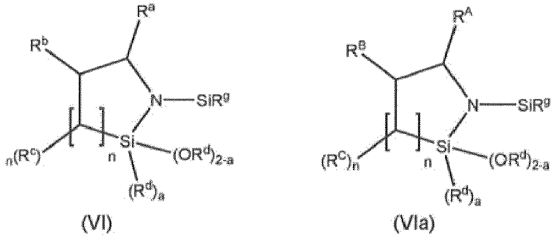 où
a est égal à 0, 1 ou 2 ;
x représente 0 à 100 ;
y représente 1 à 1000 ;
n représente 0 à 6 ;
- chaque R^{a}, R^{b}, R^{c}, R^{d} ou R^{g} représente indépendamment H ou un groupe alkyle en C1 à C20 à chaîne droite ou ramifiée, éventuellement substitué, un groupe alcényle en C2 à C20 à chaîne droite ou ramifiée, éventuellement substitué, un groupe cycloalkyle en C3 à C20, éventuellement substitué, un groupe cycloalcényle en C4 à C20, éventuellement substitué, un groupe alcynyle en C4 à C20 à chaîne droite, ramifiée ou cyclique, éventuellement substitué, ou un groupe hétéroalkyle en C2 à C20 à chaîne droite ou ramifiée, éventuellement substitué, un groupe hétéroalcényle en C3 à C20 à chaîne droite, ramifiée ou cyclique, éventuellement substitué, ou un groupe aryle ou hétéroaryle en C4 à C14, éventuellement substitué ;
- chaque R^{A} et/ou R^{B} et/ou (R^{C})ₙ, pris ensemble, forment un cycle de 4 à 10 chaînons, de préférence un cycle de 5 à 8 chaînons, de manière particulièrement préférée un cycle de 5 à 6 chaînons.

11. Composition selon l'une des revendications précédentes, **caractérisée en ce qu'**elle contient au moins un organopolysiloxane, qui est de préférence un diorganopolysiloxane α, ω-fonctionnel.

12. Composition selon l'une des revendications précédentes, **caractérisée en ce qu'**elle contient :
a) de 30 à 70 % en poids de α, ω-dihydroxydialkylorganopolysiloxane selon la revendication 1, lettre c ;
b) de 1 à 10 % en poids de durcisseur selon la revendication 1, lettre a et
c) de 0,1 à 10 % en poids d'organosilane selon la revendication 1, lettre b, en particulier d'organosilane hétérocyclique.

13. Procédé de préparation d'une composition, comprenant les étapes consistant à :
(i) mélanger sous vide un organopolysiloxane, de préférence un α, ω-dihydroxydialkylorganopolysiloxane avec un durcisseur ou un mélange de durcisseurs selon l'une des revendications 1 à 12 précédentes ;
(ii) incorporer sous vide un organosilane, en particulier un organosilane hétérocyclique selon l'une des revendications 1 à 12 précédentes, et un catalyseur, le catalyseur étant choisi dans le groupe constitué de préférence par des carboxylates d'étain, des composés de titane, de zirconium ou d'aluminium, de manière particulièrement préférée dans le groupe constitué par des titanasilsesquioxanes (Ti-POSS), le dilaurate de dibutylétain, le divalérate de dibutylétain, le diacétate de dibutylétain, le dinodécanoate de dibutylétain, le diacétylacétonate de dibutylétain, le bis(2-éthylhexanoate) de dioctylétain, le dimaléate de dibutylétain, l'octoate d'étain (II) et le tris(2-éthylhexanoate) de butylétain, et de manière particulièrement préférée, est choisie dans le groupe constitué par le (iBu)₇Si₇O₁₂TiOEt, le (C₈H₁₇)₇Si₇O₁₂TiOEt, le dilaurate de dibutylétain, le diacétate de dibutylétain et l'octoate d'étain (II).

14. Utilisation d'une composition selon l'une des revendications 1 à 10 précédentes pour la préparation d'une masse de caoutchouc silicone.

15. Utilisation d'une composition selon l'une des revendications précédentes comme agent d'étanchéité, adhésif, masse de scellement ou agent de revêtement.
